(19)

Europäisches
Patentamt
European
Patent Office
Office européen
des brevets

(11) **EP 3 608 364 A1**

(12) **EUROPEAN PATENT APPLICATION**

(43) Date of publication:
**12.02.2020 Bulletin 2020/07**

(51) Int Cl.:
**C08L 23/14** *(2006.01)*

(21) Application number: **18187512.1**

(22) Date of filing: **06.08.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Borealis AG**
**1220 Vienna (AT)**

(72) Inventors:
• WANG, Jingbo
  **4021 Linz (AT)**

• **EK, Carl-Gustaf**
  **444 86 Stenungsund (SE)**
• **BERNREITNER, Klaus**
  **4021 Linz (AT)**
• **MARTÍN-MARTÍNEZ, José Miguel**
  **03560 Alicante (ES)**
• **DE LUCAS-FREILE, Alfonso**
  **09001 Burgos (ES)**
• **FUENSANTA-SORIANO, Mónica**
  **03560 Alicante (ES)**

(74) Representative: **Maiwald Patent- und Rechtsanwaltsgesellschaft mbH Elisenhof Elisenstraße 3 80335 München (DE)**

(54) **MULTIMODAL PROPYLENE RANDOM COPOLYMER BASED COMPOSITION SUITABLE AS HOT MELT ADHESIVE COMPOSITION**

(57)    The present application relates to a composition comprising a polypropylene resin, which comprises a multimodal propylene random copolymer (R-PP) with a melt flow rate MFR of at least 50 g/10 min and a propylene copolymer (PC), which is different from the multimodal propylene random copolymer (R-PP), and a tackifying resin.

EP 3 608 364 A1

## Description

The present invention relates to a composition comprising a polypropylene resin which comprises a multimodal propylene random copolymer with a melt flow rate MFR of at least 50 g/10 min and a propylene copolymer (PC), which is different from the propylene random copolymer (R-PP), and a tackifying resin. It further relates to an article comprising the composition and to a process for producing said article. The invention also relates to the use of the composition in the preparation of an article.

## Background art

A hot-melt adhesive composition is at room temperature a solid thermoplastic based composition that quickly melts upon heating and then sets to a firm bond upon cooling. A hot-melt adhesive composition offers the possibility of almost instantaneous bonding which makes it an excellent candidate in automated production processes.

Typically a hot-melt adhesive composition includes a polymer resin and other components like for example a tackifying resin, a plasticizer resin, additive(s) and/or filler(s). The polymer resin normally used in a hot-melt adhesive composition can be for example a polyolefin resin (ethylene- or propylene-based polymer resin), a functionalised polyolefin resin (ethylene or propylene copolymer with reactive groups), a styrene block copolymer resin, an ethylene vinyl acetate resin, etc.

Important characteristics of a hot-melt adhesive composition include softening point, hardness, migration and blooming, resistance to discoloration and compatibility with other components of the formulation. Depending on the final application an appropriate hot -melt adhesive composition is chosen so that it fulfills the requirements for that specific final application.

When choosing a hot-melt adhesive composition, the contribution of the polymer resin component is vital, in particular for the cohesion properties. The role of the polymer resin is to provide the backbone of the composition and provide the primary mechanical properties such as strength, both in tension and in shear, flexibility, elasticity, impact properties and the basis for the heat resistance of the hot-melt adhesive. In addition to the cohesion properties, the polymer resin contributes to the adhesion properties based on the polymer structure and chemistry. The combination of both good cohesion and good adhesion of the hot-melt composition, for a particular application and towards the substrates to be bonded, the bond and the practical adhesion properties, is very important for the function and performance of the bond.

The adhesion properties for a hot-melt adhesive composition are generally for a specific substrate/adhesive combination practically determined by the additional components in the composition, e.g. via tackifying resins. The adhesion properties are important; however the cohesion properties, which originate from the polymer resin component properties mainly, are practically even more important and enable the hot-melt adhesive to bring a durable solution to substrate movements and conditions appearing during the expected lifetime of the bonded component. This means that the bond could be kept intact and fit in a system component based on a substrate/adhesive combination, having structural integrity and properties enabling the bond to distribute and withstand the stresses and strains and enabling energy dissipation in practical use. The man skilled in the art knows that the dissipation of energy within the adhesive plays a key role in the cohesion properties of such adhesive i.e., when pulling or shearing apart two surfaces that were glued by means of an specific adhesive, the force which can be contributed to dissipation is normally considerably larger compared to the force due to the surface energy and/or a chemical bond between the substrate and the adhesive. Thus, better energy dissipation within the adhesive leads to better cohesion properties which then results in better overall bond performance (practical adhesion properties) of such adhesive. The hot-melt adhesive composition is used in a wide variety of applications, for example in combination with nonwoven materials such as for example disposable diapers and sanitary napkins, packaging such as for example case and carton sealing, bookbinding, bottle labelling, woodworking, textile and pressure sensitive application such as for example tapes, films and labels.

WO2014/014491 describes a hot-melt adhesive composition comprising a polypropylene impact copolymer, an olefin based elastomer, a tackifier, a plasticizer, and a stabilizer or antioxidant where the viscosity of the composition is equal or less than 20000 mPas at 163°C. Although WO2014/014491 describes a hot-melt adhesive composition comprising a polypropylene impact copolymer, the claimed invention is not based on the mechanical properties of such polypropylene impact copolymer. It mentions that the polypropylene impact copolymer as such is not suitable to produce effective adhesive performance. Another disadvantage is that the claimed hot-melt adhesive composition comprises many components other than the polypropylene impact copolymer, thereby adding more complexity to the hot-melt adhesive composition and its production.

Therefore there still exists a need for compositions which are suitable as hot-melt adhesive compositions with a proper combination of cohesive and adhesive properties.

## Summary of the invention

The disadvantages of the prior art hot melt adhesive compositions have now been overcome by providing a composition comprising

(A) a polypropylene resin comprising

(A-1) a multimodal propylene random copolymer (R-PP), being a multimodal random copolymer of propylene and one or more comonomer(s) selected from ethylene and $C_4$-$C_{10}$ alpha-olefins, with a melt flow rate MFR of at least 50 g/10 min, determined according to ISO 1133 at a temperature of 230°C and a load of 2.16 kg and (A-2) a propylene copolymer (PC), which is different from the multimodal propylene random copolymer (R-PP) and has

a) at least one comonomer selected from ethylene and $C_4$-$C_{12}$ alpha-olefins,
b) a total comonomer content in the range of 4.5 to 20.0 % by weight, based on the total weight amount of monomer units in the propylene copolymer (PC),
c) a Vicat-A temperature > 80 °C, as measured according to ISO 306,
d) a storage modulus (G'23) in the range of from 100 to 1000 MPa, as measured at 23 °C according to ISO 6721-02 and ISO 6721-07, and
e) a melting temperature in the range of from 120 °C to 160 °C, as measured according to ISO 11357-3.

(B) a tackifying resin being selected from aliphatic, aromatic, aliphatic/aromatic copolymer hydrocarbon or heterohydrocarbon resins or mixtures thereof.

The composition as defined above or below has been found to be suitable as hot-melt adhesive composition showing an improved balance of properties of cohesive and adhesive properties such as a high maximum probe tack at an attractive temperature range, a low Brookfield melt viscosity especially at a temperature of 160°C, high peel strength, high shear strength, low softening point and long open time. The property combination of the invention provides a broad working window within the claimed ranges which can be adjusted according to needs of different applications.

The present invention further relates to an article comprising the composition as defined above or below and at least one substrate, wherein the composition is in direct contact with at least one surface of said substrate.

Still further, the present invention relates to a process for producing an article as defined above or below, wherein the process comprises the step of applying at least one composition as defined above or below directly on at least one surface of the at least one substrate.

Additionally, the present invention relates to the use of the composition as defined above or below for the preparation of an article.

Finally, the present invention relates to a process for preparing the composition as defined above or below by combining the polypropylene resin (A) with the tackifying resin (B) and one or more, preferably all of the plasticizer resin (C), the filler (D) and the additives (E).

## Definitions

The polypropylene resin is meant as the entirety of all polymeric components present in the composition as defined above or below. The polypropylene resin can consist of only one polymeric component which then is the propylene random copolymer (R-PP). However, the polypropylene resin can comprise further polymeric components other than the propylene random copolymer (R-PP). Polypropylene resin means that the majority of the weight amount of the polypropylene resin results from propylene homo- or copolymers.

The term "random" indicates that the comonomer of the random copolymer of propylene (R-PP) is randomly distributed within the copolymer of propylene. The term random is understood according to IUPAC (Glossary of basic terms in polymer science; IUPAC recommendations 1996).

As known for a skilled person, a random copolymer is different from heterophasic polypropylene. Generally, a heterophasic polypropylene is a propylene copolymer comprising a propylene homo- or random copolymer matrix component (1) and an elastomeric copolymer component (2) of propylene with one or more of ethylene and C4-C8-olefin comonomers, wherein the elastomeric (amorphous) copolymer component (2) is dispersed in said propylene homo- or random copolymer matrix polymer (1).

A propylene homopolymer is a polymer which essentially consists of propylene monomer units. Due to impurities especially during commercial polymerization processes a propylene homopolymer can comprise up to 0.1 mol% comonomer units, preferably up to 0.05 mol% comonomer units and most preferably up to 0.01 mol% comonomer units.

"Multimodal" means herein that the propylene random copolymer (R-PP) present in the composition of the invention has at least two polymer components which are different at least with respect to 1) MFR and 2) comonomer content. "Different" means herein that polymers differ in at least one measurable property such as molecular weight, molecular weight distribution, amount of comonomers, etc.

In the following amounts are given as % by weight unless it is stated otherwise.

**Embodiments of the invention**

**Composition**

The composition of the invention comprises the polypropylene resin (A) and the tackifying resin (B). Optionally the composition further comprises one or more, preferably at least two of a plasticizer resin (C), a filler (D) and additives (E).

In a preferred embodiment the composition of the invention comprises the polypropylene resin (A), the tackifying resin (B), a plasticizer resin (C), a filler (D) and additives (E).

The composition can comprise further components.

It is, however, preferred that the composition consists of the polypropylene resin (A), the tackifying resin (B) and optionally one or more a plasticizer resin (C), a filler (D) and additives (E).

It is especially preferred that the composition consists of the polypropylene resin (A), the tackifying resin (B), the plasticizer resin (C), the filler (D) and additives (E).

Preferably, the composition comprises, more preferably consists of

(A) from 10 to 60 % by weight, preferably 20 to 55 % by weight, most preferably 25 to 50 % by weight of the polypropylene resin,
(B) from 20 to 90 % by weight, preferably 25 to 60 % by weight, most preferably 30 to 50 % by weight of the tackifying resin,
(C) from 0 to 60 % by weight, preferably 1.0 to 60 % by weight, more preferably 5.0 to 45 % by weight, most preferably 10 to 30 % by weight of the plasticizer resin,
(D) from 0 to 50 % by weight, preferably 0.5 to 40 % by weight, most preferably 1.0 to 30 % by weight of the filler, and
(E) from 0 to 5.0 % by weight, preferably 0.1 to 4.0 % by weight, more preferably 0.15 to 3.0 % by weight, most preferably 0.2 to 2.0 % of the additives.

The above listed amounts in percentages by weight are based on the total weight amount of the composition.

The amount of the polypropylene resin (A) in the composition is preferably in the range of from 10 to 60 % by weight, more preferably 20 to 55 % by weight, most preferably 25 to 50 % by weight, based on the total weight amount of the composition. A suitable lower limit is 10 % by weight, preferably 20 % by weight and most preferably 25 % by weight. A suitable upper limit is 60 % by weight, preferably 55 % by weight and most preferably 50 % by weight.

The amount of the tackifying resin (B) in the composition is preferably in the range of from 20 to 90 % by weight, more preferably 25 to 60 % by weight, most preferably 30 to 50 % by weight, based on the total weight amount of the composition. A suitable lower limit is 20 % by weight, preferably 25 % by weight and most preferably 30 % by weight. A suitable upper limit is 90 % by weight, preferably 60 % by weight and most preferably 50 % by weight.

The amount of the optional plasticizer resin (C) in the composition is suitably in the range of from 0 to 60 % by weight, preferably in the range of from 1.0 to 60 % by weight, more preferably 5.0 to 45 % by weight, most preferably 10 to 30 % by weight, based on the total weight amount of the composition. A suitable lower limit is 0 % by weight, preferably 1.0 % by weight, more preferably 5.0 % by weight and most preferably 10 % by weight. A suitable upper limit is 60 % by weight, preferably 45 % by weight and most preferably 30 % by weight.

The amount of the filler (D) in the composition is preferably in the range of from 0 to 50 % by weight, more preferably 0.5 to 40 % by weight, most preferably 1.0 to 30 % by weight, based on the total weight amount of the composition. A suitable lower limit is 0 % by weight, preferably 0.5 % by weight and most preferably 1.0 % by weight. A suitable upper limit is 50 % by weight, preferably 40 % by weight and most preferably 30 % by weight.

The amount of the additives (E) in the composition is preferably in the range of from 0 to 5.0 % by weight, more preferably 0.1 to 4.0 % by weight, still more preferably 0.15 to 3.0 % by weight, most preferably 0.2 to 2.0 %, based on the total weight amount of the composition. A suitable lower limit is 0 % by weight, preferably 0.1 % by weight, more preferably 0.15 % by weight and most preferably 0.2 % by weight. A suitable upper limit is 5.0 % by weight, preferably 4.0 % by weight, more preferably 3.0 % by weight and most preferably 2.0 % by weight.

The composition according to the invention preferably has a Brookfield melt viscosity at 160 °C of less than 60,000 mPa·s, preferably less than 40,000 mPa·s, more preferably less than 30,000 mPa·s, most preferably less than 20,000 mPa·s, as measured according to ASTM D-3236. The lower limit of the Brookfield meld viscosity at 160°C is preferably at least 4,000 mPa·s, more preferably at least 7,000 mPa·s, most preferably at least 10,000 mPa·s.

The composition according to the invention preferably has a Brookfield melt viscosity at 150 °C of less than 75,000 mPa·s, preferably less than 55,000 mPa·s, more preferably less than 40,000 mPa·s, most preferably less than 30,000 mPa·s, as measured according to ASTM D-3236. The lower limit of the Brookfield meld viscosity at 150°C is preferably at least 7,000 mPa·s, more preferably at least 10,000 mPa·s, most preferably at least 15,000 mPa·s.

The composition according to the invention preferably has a Brookfield melt viscosity at 180 °C of less than 40,000 mPa·s, preferably less than 30,000 mPa·s, more preferably less than 25,000 mPa·s, most preferably less than 15,000 mPa·s, as measured according to ASTM D-3236. The lower limit of the Brookfield meld viscosity at 180°C is preferably at least 3,000 mPa·s, more preferably at least 5,000 mPa·s, most preferably at least 7,000 mPa·s.

The composition according to the invention preferably has a maximum probe tack of at least 150 kPa, preferably of at least 500 kPa, most preferably of at least 600 kPa, preferably to an upper limit of not more than 1,500 kPa, more preferably not more than 1,100 kPa, wherein the maximum probe tack is preferably measured at a temperature of from 50 °C to 100 °C, more preferably at a temperature of from 65 °C to 85 °C.

The composition according to the invention preferably has a softening point of not more than 160°C, more preferably not more than 155°C and most preferably of not more than 150°C. The softening point is usually at least 120°C.

The composition according to the invention preferably has an open time of at least 2 s, more preferably of at least 5 s and most preferably of at least 10 s.

In some embodiments the composition according to the invention preferably has an open time of at least 15 s or even at least 20 s. The open time is usually not more than 100 s.

It has been found that the compositions according to the invention as defined above and below are especially suitable as adhesive compositions, such as hot melt adhesive compositions.

The compositions according to the invention as defined above and below show a superior balance of properties of cohesive and adhesive properties such as a high maximum probe tack at an attractive temperature range, a low Brookfield melt viscosity especially at a temperature of 160°C, high peel strength, high shear strength, low softening point and long open time.

**Polypropylene resin (A)**

The polypropylene resin (A) comprises the multimodal propylene random copolymer (RR-P) and the propylene copolymer (PC) which is different from the multimodal propylene random copolymer (RR-P). Optionally, the polypropylene resin (A) comprises further polymeric components.

The polypropylene resin (A) preferably consists of the multimodal propylene random copolymer (RR-P) and the propylene copolymer (PC) which is different from the multimodal propylene random copolymer (RR-P).

The polypropylene resin (A) can comprise the multimodal propylene random copolymer (RR-P), the propylene copolymer (PC) and additional polymeric components.

It is, however, preferred that the polypropylene resin (A) consists of the multimodal propylene random copolymer (RR-P) and a propylene copolymer (PC).

Preferably, the weight ratio of the multimodal propylene random copolymer (R-PP) and the propylene copolymer (PC) in the polypropylene resin is from 1 : 2 to 5 : 1, more preferably 1 : 1 to 4 : 1, most preferably 1.5 : 1 to 3 : 1.

The amount of multimodal propylene random copolymer (R-PP) in the polypropylene resin is preferably in the range of from 30 to 85 % by weight, more preferably 50 to 80 % by weight, most preferably 60 to 75 % by weight, based on the total weight of the polypropylene resin. The amount of propylene copolymer (PC) in the polypropylene resin is preferably in the range of from 15 to 70 % by weight, more preferably 20 to 50 % by weight, most preferably 25 to 40 % by weight, based on the total weight of the polypropylene resin.

**Multimodal propylene random copolymer (RR-P)**

The multimodal propylene random copolymer is a random copolymer of propylene and one or more comonomer(s) selected from ethylene and $C_4$-$C_{10}$ alpha-olefins.

Preferably, the one or more comonomer(s) are selected from ethylene and $C_4$-$C_8$ alpha-olefins, such as ethylene, 1-butene and/or 1-hexene. Especially suitable comonomer(s) are ethylene and 1-butene. Mostly preferred is ethylene.

The multimodal propylene random copolymer preferably has a comonomer content of from 1.0 to 12 % by weight, more preferably of from 2.0 to 8.0 % by weight still more preferably of from 2.5 to 6.0 % yb weight and most preferred of from 3.0 to 6.0 % by weight, based on the total weight amount of monomer units in the multimodal propylene random copolymer.

The multimodal propylene random copolymer has a melt flow rate MFR of at least 50 g/10 min, preferably of at least 60 g/10 min, more preferably of at least 70 g/10 min and most preferably of at least 100 g/10 min, determined according to ISO 1133 at a temperature of 230°C and a load of 2.16 kg. The upper limit of the melt flow rate $MFR_2$ usually does not exceed 500 g/10 min and is preferably not more than 250 g/10 min, most preferably not more than 220 g/10 min.

The propylene random copolymer (RR-P) is multimodal, preferably bimodal. This means that the propylene random copolymer (RR-P) includes two or more, preferably two, polymer components, which are different at least with respect to 1) MFR and 2) comonomer content. At least one, preferably at least two and most preferably all of polymer components of the multimodal propylene random copolymer (RR-P) are propylene random copolymer(s) as defined above.

Thereby, the multimodal propylene random copolymer is defined as such that it does not include an elastomeric component.

The multimodal propylene random copolymer (RR-P) preferably has a Vicat A-temperature, measured according to ISO 306, of at least 100 °C, more preferably of at least 110 °C, still more preferably of at least 115 °C and most preferably of at least 118 °C. The upper limit of the Vicat A-temperature usually does not exceed 150 °C, preferably does not exceed 140 °C and most preferably does not exceed 130 °C.

The multimodal propylene random copolymer (RR-P) preferably has a melting temperature Tm, measured according to ISO11357-3, in the range of from 130 °C to 170 °C, more preferably in the range of from 135 °C to 160 °C and most preferably in the range of from 140 °C to 150 °C.

The multimodal propylene random copolymer (RR-P) preferably has a tensile modulus, measured according to ISO 527-1/2 at 23 °C, of at least 500 MPa, preferably at least 700 MPa, still more preferably at least 850 MPa, and most preferably at least 900 MPa. The upper limit of the tensile modulus is preferably not more than 1,500 MPa, more preferably not more than 1,250 MPa.

Further, the multimodal propylene random copolymer (RR-P) preferably has a tensile strength, measured according to ISO 527-1/2 at 23 °C, of at least 20 MPa, more preferably of at least 25 MPa and most preferably of at least 28 MPa. The upper limit of the tensile strength is preferably not more than 50 MPa, more preferably not more than 40 MPa.

Still further, the multimodal propylene random copolymer (RR-P) preferably has an elongation at break, measured according to ISO 527-1/2 at 23 °C, of not more than 400 %, more preferably not more than 300 %, still more preferably not more than 200 % and most preferably not more than 175 %. The lower limit of the elongation at break is preferably at least 100 %, more preferably at least 125 %.

The multimodal propylene random copolymer (RR-P) generally does not contribute to the adhesive properties of the composition.

The maximum probe tack of the multimodal propylene random copolymer (RR-P) is usually not more than 20 kPa, preferably not more than 10 kPa, most preferably not more than 1 kPa. The temperature at which the maximum probe tack of the multimodal propylene random copolymer is obtained is preferably in the range of 80 °C to 150 °C, preferably in the range of 95 °C to 130 °C.

The multimodal propylene random copolymer (RR-P) is usually present in the composition in an amount of 5 to 50 % by weight, preferably in an amount of 10 to 40 % by weight, more preferably in an amount of 15 to 35% by weight, most preferably in an amount of 20 to 35 % by weight, based on the total weight amount of the composition.

Preferably, the propylene random copolymer (A) is polymerized in a multistage process known in the art wherein different fractions of the propylene random copolymer (RR-P) are polymerized in different polymerization reactors connected in series.

The multistage process can be conducted in two or more polymerization reactors connected in series. It is thereby preferred that the multistage process is conducted in two polymerization reactors, optionally preceded by a pre-polymerization reactor.

The polymerization reactors are generally selected from slurry reactors and gas phase reactors such as fluidized bed reactors.

The first reactor (1st R') is preferably a slurry reactor (SR) and can be any continuous or simple stirred batch tank reactor or loop reactor operating in bulk or slurry. Bulk means a polymerization in a reaction medium that comprises of at least 60 % (w/w) monomer. According to the present invention the slurry reactor (SR) is preferably a loop reactor (LR). The second reactor (2nd R') and any optional further reactor are preferably gas phase reactors (GPR). Such gas phase reactors (GPR) can be any mechanically mixed or fluid bed reactors. Preferably the gas phase reactors (GPR) comprise a mechanically agitated fluid bed reactor with gas velocities of at least 0.2 m/sec. Thus it is appreciated that the gas phase reactor is a fluidized bed type reactor preferably with a mechanical stirrer.

Thus in a preferred embodiment the first reactor (1st R') is a slurry reactor (SR), like loop reactor (LR), whereas the second reactor (2nd R') and the optional further reactor(s) are gas phase reactors (GPR). Accordingly for the instant process at least two polymerization reactors, namely a slurry reactor (SR), like loop reactor (LR), a first gas phase reactor (GPR-1), and optionally at least one further gas phase reactor, preferably a slurry reactor (SR), like loop reactor (LR), and only one first gas phase reactor (GPR-1), connected in series are used. If needed, prior to the slurry reactor (SR) a pre-polymerization reactor is placed.

A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of Basell.

Preferably, in the instant process for producing the multimodal propylene random copolymer (RR-P), as defined above the conditions for the first reactor (1st R'), i.e. the slurry reactor (SR), like a loop reactor (LR), may be as follows:

- the temperature is within the range of 40 °C to 110 °C, preferably between 60 °C and 100 °C, like 68 °C to 95 °C,
- the pressure is within the range of 20 bar to 80 bar, preferably between 40 bar to 70 bar,
- comonomer is added for controlling the comonomer content in a manner known in the art,
- hydrogen can be added for controlling the molar mass in a manner known per se.

Subsequently, the reaction mixture from the first reactor (1st R') is transferred to the second reactor (2nd R'), i.e. gas phase reactor (GPR-1), whereby the conditions are preferably as follows:

- the temperature is within the range of 50 °C to 130 °C, preferably between 60 °C and 100 °C,
- the pressure is within the range of 5 bar to 50 bar, preferably between 15 bar to 35 bar,
- comonomer is added for controlling the comonomer content in a manner known in the art,
- hydrogen can be added for controlling the molar mass in a manner known per se.

The conditions in the optional and not preferred further reactor(s) (3rd R') are similar to the second reactor (2nd R').

The residence time in the different reactors are regulated as known in the art in order to obtain the desired weight ratios of the propylene random copolymer fractions of the multimodal propylene random copolymer (RR-P).

If desired, the polymerization may be effected in a known manner under supercritical conditions in the first reactor (1st R'), i.e. in the slurry reactor (SR), like in the loop reactor (LR), and/or as a condensed mode in the gas phase reactor(s) (GPR).

Preferably the process comprises also a prepolymerization with the catalyst system, as mentioned below, comprising a Ziegler-Natta procatalyst, an external donor and optionally a cocatalyst.

In a preferred embodiment, the prepolymerization is conducted as bulk slurry polymerization in liquid propylene, i.e. the liquid phase mainly comprises propylene, with minor amount of other reactants and optionally inert components dissolved therein.

The prepolymerization reaction is typically conducted at a temperature of 0 to 50 °C, preferably from 10 to 45 °C, and more preferably from 15 to 40 °C.

The pressure in the prepolymerization reactor is not critical but must be sufficiently high to maintain the reaction mixture in liquid phase. Thus, the pressure may be from 20 to 100 bar, for example 30 to 70 bar.

The catalyst components are preferably all introduced to the prepolymerization step. However, where the solid catalyst component (i) and the cocatalyst (ii) can be fed separately, it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is possible to add other components also to the prepolymerization stage. Thus, hydrogen may be added into the prepolymerization stage to control the molecular weight of the prepolymer as is known in the art. Further, antistatic additive may be used to prevent the particles from adhering to each other or to the walls of the reactor.

The precise control of the prepolymerization conditions and reaction parameters is within the skill of the art.

It is preferred that the propylene copolymer (R-PP) is produced in the presence of

(a) a Ziegler-Natta catalyst (ZN-C) comprises a titanium compound (TC), a magnesium compound (MC) and an internal donor (ID), wherein said internal donor (ID) is a non-phtalic acid ester,
(b) optionally a co-catalyst (Co), and
(c) optionally an external donor (ED).

The catalyst used in the present invention is a solid Ziegler-Natta catalyst (ZN-C), which comprises a titanium compound (TC), a magnesium compound (MC) and an internal donor (ID), wherein said internal donor (ID) is a non-phthalic acid ester, most preferably diester of non-phthalic dicarboxylic acids as described in more detail below. Thus, the catalyst used in the present invention is fully free of undesired phthalic compounds.

The Ziegler-Natta catalyst (ZN-C) can be further defined by the way as obtained. Accordingly the Ziegler-Natta catalyst (ZN-C) is preferably obtained by a process comprising the steps of providing a solution of at least one complex (A) being a complex of a magnesium compound (MC) and an alcohol comprising in addition to the hydroxyl moiety at least one further oxygen bearing moiety (A1) being different to a hydroxyl group, and optionally at least one complex (B) being a complex of said magnesium compound (MC) and an alcohol not comprising any other oxygen bearing moiety (B1),

combining said solution with a titanium compound (TC) and producing an emulsion the dispersed phase of which contains more than 50 mol.-% of the magnesium;

agitating the emulsion in order to maintain the droplets of said dispersed phase preferably within an average size range of 5 to 200$\mu$m;

solidifying said droplets of the dispersed phase;

recovering the solidified particles of the olefin polymerisation catalyst component, and wherein an internal donor (ID) is added at any step prior to step c) and said internal donor (ID) is non-phthalic acid ester, preferably said internal donor (ID) is a diester of non-phthalic dicarboxylic acids as described in more detail below.

Detailed description as to how such a Ziegler-Natta catalyst (ZN-C) can be obtained is disclosed in WO 2012/007430 and WO 2014/187687.

**Propylene copolymer (PC)**

The propylene copolymer (PC) preferably has one or more, preferably all of the following properties:

a) at least one comonomer selected from ethylene and/or $C_4$-$C_{12}$ alpha-olefin,
b) a total comonomer content in the range of 4.5 to 20.0 wt%,
c) Vicat-A temperature > 80 °C, as measured according to ISO 306,
d) storage modulus (G'23) in the range of 100 to 1,000 MPa as measured at 23 °C according to ISO 6721-02 and ISO 6721-07,
e) melting temperature in the range of 120 °C to 160 °C as measured according to ISO 11357-3.

Generally the propylene copolymer (PC) comprises units derived from propylene and at least one comonomer selected from ethylene and/or linear or branched $C_4$-$C_{12}$ alpha-olefin. Preferably the propylene copolymer (PC) comprises units derived from propylene, ethylene and optionally at least one comonomer selected from the group consisting of linear or branched $C_4$-$C_{12}$ alpha-olefin. More preferably the propylene copolymer (PC) comprises units derived from propylene, ethylene and optionally one comonomer selected from the group consisting of linear $C_4$-$C_{12}$ alpha-olefin. Even more preferably the propylene copolymer (PC) comprises units derived from propylene and at least ethylene and optionally one comonomer selected from the group consisting of 1-butene, 1-pentene, 1-hexene, 1-heptene, 1-octene, 1-nonene, 1-decene, 1-undecenene and 1-dodecene wherein 1-butene and 1-hexene are preferred. It is particularly preferred that the propylene copolymer (PC) consists of units derived from propylene, ethylene and 1-butene.

The propylene copolymer (PC) can be a propylene copolymer-1 (PC-1) or a propylene copolymer-2 (PC-2) as further described in this document.

The propylene copolymer (PC) for use in the composition according to the invention generally is produced in polymerisation processes and under conditions well-known to the person skilled in the art of making propylene copolymers. The propylene copolymer (PC) can be produced by copolymerising propylene with the comonomers in the amounts further described below. Generally a polymerisation catalyst will be present. The polymerisation catalyst typically comprises a transition metal compound and an activator. Suitable polymerisation catalysts known in the art include Ziegler-Natta catalysts and single site catalysts.

Generally a Ziegler-Natta type catalyst used for the propylene copolymer (PC) preparation will be a stereospecific, solid, high yield Ziegler-Natta catalyst component comprising as main components Mg, Ti and Cl. Generally, in addition to the solid catalyst component, at least one cocatalyst as well as at least one external donor will be used in the polymerisation process.

The components of the catalyst may be supported on a particulate support, such as for example an inorganic oxide, like for example silica or alumina. Alternatively, a magnesium halide may form the solid support. It is also possible that the catalyst components are not supported on an external support, but the catalyst is prepared by an emulsion-solidification method or by a precipitation method, as is well-known by the man skilled in the art of catalyst preparation.

The solid catalyst usually also comprises at least one electron donor (internal electron donor) and optionally aluminum. Suitable external electron donors used in the polymerisation are well known in the art and include ethers, ketones, amines, alcohols, phenols, phosphines and silanes.

Examples of suitable Ziegler-Natta catalysts and components in the catalysts are described among others in WO87/07620, WO92/21705, WO93/11165, WO93/11166, WO93/19100, WO97/36939, WO98/12234, WO99/33842, WO03/000756, WO03/000757, WO03/000754, WO03/000755, WO2004/029112, EP2610271, WO2012/007430, WO92/19659, WO92/19653, WO92/19658, US4382019, US4435550, US4465782, US4473660, US4560671, US5539067, US5618771, EP45975, EP45976, EP45977, WO95/32994, US4107414, US4186107, US4226963, US4347160, US4472524, US4522930, US4530912, US4532313, US4657882, US4581342, US4657882.

Instead of using a Ziegler-Natta type catalyst it is also possible to use a single site catalyst in the polymerisation process. Preferably, the single site type catalyst is a metallocene catalyst. Such a catalyst generally comprises a transition metal compound which contains at least one substituted or non-substituted cyclopentadienyl, indenyl or fluorenyl ligand. Examples of suitable metallocene compounds are given, among others, in EP629631, EP629632, WO00/26266, WO02/002576, WO02/002575, WO99/12943, WO98/40331, EP776913, EP1074557 and WO99/42497.

The metallocene catalyst is generally used together with an activator. Suitable activators are metal alkyl compounds and especially aluminum alkyl compounds known in the art.

The process for copolymerising propylene with the comonomers previously described is known in the state of the art. Such a polymerisation process generally comprises at least one polymerisation stage however the polymerisation process can also comprise additional polymerisation stages. The polymerisation at each stage can be carried out in solution, slurry, fluidized bed, bulk or gas phase. In one particular embodiment the process contains at least one bulk reactor stage and at least one gas phase reactor stage, each stage comprising at least one reactor and all reactors being arranged in cascade. In one particularly preferred embodiment the polymerisation process comprises at least one bulk reactor and at least one gas phase reactor arranged in that order. In some preferred polymerisation processes the process comprises one bulk reactor and at least two gas phase reactors, e.g. two or three gas phase reactors. The process may further comprise pre- and post-reactors. Pre-reactors comprise typically pre-polymerisation reactors. In this kind of processes high polymerisation temperatures are generally used in order to achieve specific properties of the polymers. Typical temperatures in all processes are 70 °C or higher, preferably 80 °C or higher, more preferably 85 °C or higher. The high polymerisation temperatures as mentioned above can be applied either in some or all reactors of the reactor cascade.

A preferred process is a "loop-gas phase"-process, such as developed by Borealis and known as BORSTAR™ technology. Examples of this process are described in EP0887379, WO92/12182, WO2004/000899, WO2004/111095, WO99/24478, WO99/24479 and WO00/68315. A further preferred process is the slurry-gas phase process called Spheripol™ process.

The total amount of units derived from ethylene and $C_4$-$C_{12}$ alpha-olefins in the propylene copolymer (PC) generally is in the range of 4.5 to 20.0 wt%, preferably in the range of 5.0 to 19.0 wt%, more preferably in the range of 5.5 to 18.0 wt%. A suitable lower limit is 4.5 wt%, preferably 5.0 wt%, more preferably 5.5 wt%. A suitable upper limit is 20.0 wt%, preferably 19.0 wt%, more preferably 18.0 wt%. The lower and upper indicated values of the ranges are included. The total amount of units derived from ethylene and $C_4$-$C_{12}$ alpha-olefin in the propylene copolymer (PC) is calculated based on the total amount of monomers in the propylene copolymer (PC).

The propylene copolymer (PC) generally has a Vicat-A temperature > 80 °C, preferably in the range of 81 °C to 125 °C, more preferably in the range of 85 °C to 110 °C, even more preferably in the range of 90 °C to 100 °C. The Vicat-A temperature for the propylene copolymer (PC) is determined according to ISO 306.

Generally the propylene copolymer (PC) has a storage modulus (G'23) in the range of 100 to 1,000 MPa, preferably in the range of 130 to 700 MPa, more preferably in the range of 150 to 600 MPa. The storage modulus (G'23) for the propylene copolymer (PC) is determined according to ISO 6721-02 and ISO 6721-07 at 23°C. A suitable lower limit is 100 MPa, preferably 130 MPa, more preferably 150 MPa. A suitable upper limit is 1,000 MPa, preferably 700 MPa, more preferably 600 MPa. The lower and upper indicated values of the ranges are included

The propylene copolymer (PC) generally has a melting temperature in the range of 120 °C to 160 °C as measured according to ISO 11357-3, preferably in the range of 122 °C to 155 °C, more preferably in the range of 125 °C to 150 °C. A suitable lower limit is 120 °C, preferably 122 °C, more preferably 125 °C. A suitable upper limit is 160 °C, preferably 155 °C, more preferably 150 °C. The lower and upper indicated values of the ranges are included.

Generally the propylene copolymer (PC) has a melt flow rate ($MFR_2$) in the range of 0.5 to 500 g/10min. The $MFR_2$ for the propylene copolymer (PC) is determined according to ISO 1133, at a temperature of 230 °C and under a load of 2.16 kg. It is preferred that the propylene copolymer (PC) has an $MFR_2$ in the range of 1.0 to 400 g/10min, more preferably in the range of 2.0 to 310 g/10min, even more preferably 3.0 to 250 g/10min. A suitable lower limit is 0.5 g/10min, preferably 1.0 g/10min, more preferably 2.0 g/10min, even more preferably 3.0 g/10min. A suitable upper limit is 500 g/10min, preferably 400 g/10min, more preferably 310 g/10min, even more preferably 250 g/10min. The lower and upper indicated values of the ranges are included.

Generally the propylene copolymer (PC) has a tensile modulus (E) in the range of 200 to 1,000 MPa. The tensile modulus of the propylene copolymer (PC) is determined according to ISO 527-1 at 23 °C. It is preferred that the propylene copolymer (PC) has a tensile modulus in the range of 250 to 950 MPa, more preferably in the range of 250 to 900 MPa. A suitable lower limit is 200 MPa, preferably 250 MPa. A suitable upper limit is 1,000 MPa, preferably 950 MPa, more preferably 900 MPa. The lower and upper indicated values of the ranges are included.

In one embodiment the propylene copolymer (PC) is a propylene copolymer -1 (PC-1) having at least one comonomer selected from ethylene and/or a $C_4$-$C_{12}$ alpha-olefin and wherein such propylene copolymer -1 (PC-1) has a flexibility >0.8 which is calculated according to the equation:

$$Flexibility = EAY * 100000/(TSY * E)$$

wherein:

EAY is the elongation at yield value,
TSY is the tensile strength at yield value, in MPa and
E is the tensile modulus value, in MPa.

The propylene copolymer-1 (PC-1) comprises a matrix (M) being a random propylene copolymer (R-PP-1) and dispersed therein an elastomeric propylene copolymer (EL-1). Thus the matrix (M) generally contains (finely) dispersed inclusions being not part of the matrix (M) and said inclusions contain the elastomeric propylene copolymer (EL-1). The term inclusion indicates that the matrix (M) and the inclusion form different phases within the propylene copolymer-1 (PC-1). Preferably, the propylene copolymer -1 (PC-1) according to this invention comprises as polymer components only the random propylene copolymer (R-PP) and the elastomeric propylene copolymer (EL). In other words, the propylene copolymer -1 (PC-1) may contain additives but no other polymer in an amount exceeding 5.0 wt%, more preferably not exceeding 3.0 wt%, most preferably not exceeding 1.0 wt%, based on the total weight of propylene copolymer -1 (PC-1). One additional polymer which may be present in such low amount is a polyethylene which can be a reaction by-product obtained during the preparation of the propylene copolymer -1 (PC-1).

Generally the propylene copolymer -1 (PC-1), i.e. the random propylene copolymer (R-PP-1) and the elastomeric propylene copolymer (EL-1), comprises at least one monomer copolymerisable with propylene selected from ethylene and $C_4$-$C_{12}$ alpha-olefin, in particular selected from ethylene and $C_4$-$C_8$ alpha-olefin, e.g. 1-butene and/or 1-hexene. Preferably, the propylene copolymer -1 (PC-1) comprises, more preferably consists of, at least one monomer copolymerisable with propylene from the group consisting of ethylene, 1-butene and 1-hexene. More preferably, the propylene copolymer -1 (PC-1) comprises, apart from propylene, units derivable from ethylene and/or 1-butene. In an even more preferred embodiment, the propylene copolymer -1 (PC-1) comprises units derivable from ethylene and propylene only. Still more preferably the random propylene copolymer (R-PP-1) and the elastomeric propylene copolymer (EL-1) of the propylene copolymer -1 (PC-1) contain the same comonomers, like ethylene. Accordingly, the elastomeric propylene copolymer (EL-1) is preferably an ethylene propylene rubber (EPR), whereas the random propylene copolymer (R-PP) is a random ethylene propylene copolymer.

The propylene copolymer -1 (PC-1) can have a total comonomer content in the range of 4.5 to 20.0 wt%, preferably in the range of 5.5 to 20.0 wt%, more preferably in the range of 6.5 to 18.0 wt%. A suitable lower limit is 4.5 wt%, preferably 5.5 wt%, more preferably 6.5 wt%. A suitable upper limit is 20.0 wt%, preferably 18.0 wt%. The lower and upper indicated values of the ranges are included. The total comonomer content in the propylene copolymer -1 (PC-1) is calculated based on the total amount of monomers in the propylene copolymer -1 (PC-1).

The propylene copolymer -1 (PC-1) generally has an ethylene comonomer content in the range of 6.5 to 18.0 wt%, preferably in the range of 7.0 to 17.5 wt%, more preferably in the range of 7.5 to 17.0 wt%. A suitable lower limit is 6.5 wt%, preferably 7.0 wt%, more preferably 7.5 wt%. A suitable upper limit is 18.0 wt%, preferably 17.5 wt%, more preferably 17.0 wt%. The lower and upper indicated values of the ranges are included. The ethylene comonomer content in the propylene copolymer -1 (PC-1) is calculated based on the total amount of monomers in the propylene copolymer -1 (PC-1).

The propylene copolymer -1 (PC-1) generally has a flexibility >0.8 which is calculated according to the equation:

$$Flexibility = EAY * 100000/(TSY * E)$$

wherein:

EAY is the elongation at yield value,
TSY is the tensile strength at yield value, in MPa and
E is the tensile modulus value, in MPa.

The propylene copolymer -1 (PC-1) generally has a flexibility >0.8, preferably in the range of 0.8 to 20, more preferably in the range of 0.9 to 15.

The propylene copolymer -1 (PC-1) generally has a glass transition temperature $T_{g1}$ in the range of -12 °C to -2 °C, preferably in the range of -10 °C to -3 °C. A suitable lower limit is -12 °C, preferably -10 °C. A suitable upper limit is -2 °C, preferably -3°C. The lower and upper indicated values of the ranges are included.

The propylene copolymer -1 (PC-1) generally has a glass transition temperature $T_{g2}$ in the range of -65 °C to -20 °C, preferably in the range of -60 °C to -25 °C, more preferably in the range of -58 °C to -30 °C. A suitable lower limit is -65 °C, preferably -60 °C, more preferably -58 °C. A suitable upper limit is -20 °C, preferably -25 °C, more preferably -30 °C. The lower and upper indicated values of the ranges are included.

Generally the propylene copolymer -1 (PC-1) has a storage modulus (G'23) in the range of 150 to 450 MPa, preferably in the range of 170 to 400 MPa. The storage modulus (G'23) for the propylene copolymer -1 (PC-1) is determined according to ISO 6721-02 and ISO 6721-07 at 23°C. A suitable lower limit is 150 MPa, preferably 170 MPa. A suitable upper limit is 450 MPa, preferably 400 MPa. The lower and upper indicated values of the ranges are included.

The propylene copolymer -1 (PC-1) generally has a melting temperature in the range of 135 °C to 155 °C as measured according to ISO 11357-3, preferably in the range of 137 °C to 153 °C. A suitable lower limit is 135 °C, preferably 137 °C. A suitable upper limit is 155 °C, preferably 153 °C. The lower and upper indicated values of the ranges are included.

The propylene copolymer -1 (PC-1) generally has a tensile modulus (E) in the range of 200 to 1,000 MPa. It is preferred that the propylene copolymer -1 (PC-1) has a tensile modulus in the range of 250 to 950 MPa, more preferably in the range of 250 to 900 MPa. A suitable lower limit is 200 MPa, preferably 250 MPa. A suitable upper limit is 1,000 MPa, preferably 950 MPa, more preferably 900 MPa. The lower and upper indicated values of the ranges are included.

Generally the xylene cold soluble (XCS) fraction of the propylene copolymer -1 (PC-1), measured according to ISO 16152 at 25 °C, is in the range of 15.0 to 50.0 wt%, preferably in the range from 17.0 to 48.0 wt%, more preferably in the range from 18.0 to 47.0 wt%. A suitable lower limit is 15.0 wt%, preferably 17.0 wt%, more preferably 18.0 wt%. A suitable upper limit is 50.0 wt%, preferably 48.0 wt%, more preferably 47.0 wt%. The lower and upper indicated values of the ranges are included.

Generally the xylene cold soluble fraction (XCS) of the propylene copolymer -1 (PC-1) has an intrinsic viscosity (IV) in the range of 1.0 to 4.5 dl/g, preferably in the range of 1.0 to 2.7 dl/g, more preferably in the range of 1.0 to 2.0 dl/g. A suitable lower limit is 1.0 dl/g. A suitable upper limit is 4.5 dl/g, preferably 2.7 dl/g, more preferably 2.0 dl/g. The lower and upper indicated values of the ranges are included.

Generally the propylene copolymer -1 (PC-1) has a melt flow rate (MFR$_2$) in the range of 0.8 to 90 g/10min. The MFR$_2$ for the propylene copolymer -1 (PC-1) is determined according to ISO 1133, at a temperature of 230 °C and under a load of 2.16 kg. It is preferred that the propylene copolymer -1 (PC-1) has an MFR$_2$ in the range of 0.8 to 40 g/10min, more preferably in the range of 0.8 to 25 g/10min, even more preferably in the range of 0.8 to 15 g/10min. A suitable lower limit is 0.8 g/10min. A suitable upper limit is 90 g/10min, preferably 40 g/10min, more preferably 25 g/10min, even more preferably 15 g/10min. The lower and upper indicated values of the ranges are included.

In another embodiment the propylene copolymer (PC) is a propylene copolymer -2 (PC-2) having ethylene as a comonomer and at least one selected from $C_4$-$C_{12}$ alpha-olefin and wherein such propylene copolymer -2 (PC-2) has:

    a) a glass transition temperature $T_g$ in the range of -12 to 0 °C and

    b) a total comonomer content in the range of 6.0 to 15.0 wt%.

The propylene copolymer -2 (PC-2) comprises units derived from propylene, ethylene and at least one comonomer selected from linear or branched $C_4$-$C_{12}$ alpha-olefin. Preferably the propylene copolymer -2 (PC-2) comprises units derived from propylene, ethylene and at least one comonomer selected from the group consisting of linear $C_4$-$C_{12}$ alpha-olefin. More preferably the propylene copolymer -2 (PC-2) comprises units derived from propylene, ethylene and at least one comonomer selected from the group consisting of linear polymer of 1-butene, 1-pentene, 1-hexene, 1-heptene, 1-octene, 1-nonene, 1-decene, 1-undecene and 1-dodecene, wherein 1-butene and 1-hexene are preferred. Preferably the propylene copolymer -2 (PC-2) consists of units derived from propylene, ethylene and one comonomer selected from the group consisting of linear polymer of 1-butene, 1-pentene, 1-hexene, 1-heptene, 1-octene, 1-nonene, 1-decene, 1-undecene and 1-dodecene, wherein 1-butene and 1-hexene are preferred. It is particularly preferred that the propylene copolymer -2 (PC-2) consists of units derived from propylene, ethylene and a $C_4$-alpha olefin. The $C_4$-alpha olefin can be a branched or linear $C_4$-alpha olefin, preferably linear $C_4$-alpha olefin, i.e. 1-butene.

The total amount of units derived from ethylene and $C_4$-$C_{12}$ alpha-olefins in the propylene copolymer -2 (PC-2) is generally in the range of 6.0 to 15.0 wt%, preferably in the range of 6.0 to 14.5 wt%, more preferably in the range of 6.0 to 12.0 wt%. A suitable lower limit is 6.0 wt%. A suitable upper limit is 15.0 wt%, preferably 14.5 wt%, more preferably 12.0 wt%. The lower and upper indicated values of the ranges are included. The total amount of units derived from ethylene and $C_4$-$C_{12}$ alpha-olefin in the propylene copolymer -2 (PC-2) is calculated based on the total amount of monomers in the propylene copolymer -2 (PC-2).

In the particularly preferred embodiment where the propylene copolymer -2 (PC-2) consists of units derived from propylene, ethylene and $C_4$-alpha olefin, wherein the $C_4$-alpha olefin is generally a branched or linear $C_4$-alpha olefin, preferably linear $C_4$-alpha olefin, i.e. 1-butene:

    a) the ethylene content in the propylene copolymer -2 (PC-2) is generally in the range of 0.5 to 3.0 wt%, preferably in the range of 0.6 to 2.5 wt%, more preferably in the range of 0.8 to 2.0 wt%. A suitable lower limit is 0.5 wt%, preferably 0.6 wt%, more preferably 0.8 wt%. A suitable upper limit is 3.0 wt%, preferably 2.5 wt%, more preferably 2.0 wt%. The lower and upper indicated values of the ranges are included. The amount of units derived from ethylene in the propylene copolymer -2 (PC-2) is calculated based on the total amount of monomers in the propylene copolymer -2 (PC-2).

b) the $C_4$-alpha olefin content in the propylene copolymer -2 (PC-2) is generally in the range of 5.0 to 14.0 wt%, preferably in the range of 5.2 to 13.0 wt%, more preferably in the range of 5.5 to 12.0 wt%. A suitable lower limit is 5.0 wt%, preferably 5.2 wt%, more preferably 5.5 wt%. A suitable upper limit is 14.0 wt%, preferably 13.0 wt%, more preferably 12.0 wt%. The lower and upper indicated values of the ranges are included. The $C_4$-alpha olefin content in the propylene copolymer -2 (PC-2) is calculated based on the total amount of monomers in the propylene copolymer -2 (PC-2).

The propylene copolymer -2 (PC-2) generally has a glass transition temperature $T_g$ in the range of -12 °C to 0 °C, preferably in the range of -10 °C to 0 °C, more preferably in the range of -8 °C to -1 °C. A suitable lower limit is -12 °C, preferably -10 °C, more preferably -8 °C. A suitable upper limit is 0 °C, preferably -1 °C. The lower and upper indicated values of the ranges are included.

Generally the propylene copolymer -2 (PC-2) has a storage modulus (G'23) in the range of 300 to 600 MPa, preferably in the range of 300 to 550 MPa, more preferably in the range of 300 to 500 MPa. The storage modulus (G'23) for the propylene copolymer -1 (PC-1) is determined according to ISO 6721-02 and ISO 6721-07 at 23°C. A suitable lower limit is 300 MPa. A suitable upper limit is 600 MPa, preferably 550 MPa, more preferably 500 MPa. The lower and upper indicated values of the ranges are included.

The propylene copolymer -2 (PC-2) generally has a melting temperature in the range of 125 °C to 135 °C as measured according to ISO 11357-3, preferably in the range of 127 °C to 134 °C, more preferably in the range of 129 °C to 132 °C. A suitable lower limit is 125 °C, preferably 127 °C, more preferably 129 °C. A suitable upper limit is 135 °C, preferably 134 °C, more preferably 132 °C. The lower and upper indicated values of the ranges are included.

The propylene copolymer -2 (PC-2) generally has a tensile modulus (E) in the range of 500 to 1,000 MPa. It is preferred that the propylene copolymer -2 (PC-2) has a tensile modulus in the range of 550 to 950 MPa, more preferably in the range of 600 to 900 MPa. A suitable lower limit is 500 MPa, preferably 550 MPa, more preferably 600 MPa. A suitable upper limit is 1,000 MPa, preferably 950 MPa, more preferably 900 MPa. The lower and upper indicated values of the ranges are included.

The propylene copolymer -2 (PC-2) generally has a flexibility >0.60 which is calculated according to the equation:

$$Flexibility = EAY * 100000/(TSY * E)$$

wherein:

EAY is the elongation at yield value,
TSY is the tensile strength at yield value, in MPa and
E is the tensile modulus value, in MPa.

The propylene copolymer -2 (PC-2) generally has a flexibility >0.60, preferably >0.65, more preferably >0.70.
Generally the propylene copolymer -2 (PC-2) has a melt flow rate ($MFR_2$) in the range of 2.0 to 500 g/10min. The $MFR_2$ for the propylene copolymer -2 (PC-2) is determined according to ISO 1133, at a temperature of 230 °C and under a load of 2.16 kg. It is preferred that the propylene copolymer -2 (PC-2) has an $MFR_2$ in the range of 3.0 to 400 g/10min, more preferably in the range of 5.0 to 350 g/10min. A suitable lower limit is 2.0 g/10min, preferably 3.0 g/10min, more preferably 5.0 g/10min. A suitable upper limit is 500 g/10min, preferably 400 g/10min, more preferably 350 g/10min. The lower and upper indicated values of the ranges are included.

**Tackifying resin (B)**

The composition comprises a tackifying resin (B).
A tackifying resin generally is a chemical compound or a polymer of fairly low molecular weight, compared to common polymers. The polymer can be from a natural source or from a chemical process or combination thereof. The tackifying resin generally enhances the adhesion of a final composition.
The tackifying resin is selected hydrocarbon resins or heterohydrocarbon resins. Heterohydrocarbon resins preferably include oxygen as heteroatom preferably in form of carbonyl groups, carboxyl groups or ester groups. Most preferably the heterohydrocarbon resins are hydrocarbon ester resins.

The tackifying resin is selected from an aliphatic resin, an aromatic resin, an aliphatic/aromatic copolymer resin, or mixtures thereof. Aliphatic resins cover linear aliphatic resins, which can be unbranched or branched, and cycloaliphatic resins.

In one embodiment, the aliphatic resin comprises a C5 monomer based resin and/or a dicyclopentadiene monomer based resin. Accordingly, C5 monomer based resin is a polymerisation product of C5 monomer(s), and dicyclopentadiene monomer based resin is a polymerisation product of dicyclopentadiene monomer. Preferably, in this embodiment the C5 monomer based resin and/or a dicyclopentadiene monomer based resin is/are the major component (more than 50 wt%, preferably more than 60 wt%, preferably more than 80 wt%, based on the C5 monomer based resin and/or a dicyclopentadiene monomer based resin of the component (B).

The C5 monomer can include, for example, 1-pentene, isoprene, cyclopentadiene, or 1,3-pentadiene monomers, or any combinations thereof.

In another embodiment the aliphatic resin comprises a mixture of alkanes, such as mixture of pentane.

In still another embodiment the aliphatic resin is a heterohydrocarbon resin which comprises ester groups, more preferably is an aliphatic hydrocarbyl ester of glycerol or pentaerytritol. In a further embodiment of the present invention the aromatic resin comprises a C9 monomer based resin, like an indene resin, a coumarone resin, a styrene resin or a phenol resin, such as alkyl-phenol and terpene-phenol resins, and mixtures thereof. Accordingly, C9 monomer based resin is a polymerisation product of C9 monomer(s). Preferably, in this embodiment the C9 monomer based resin is the major component (more than 50 wt%, preferably more than 60 wt%, preferably more than 80 wt%, based on the aromatic resin of the component (B).

The C9 monomer can include, for example, indene, vinyl-toluene, alpha-methylstyrene or beta-methylstyrene monomer(s).

Aromatic resins are typically based on more than one of the above-mentioned monomer units, and can be e.g. a coumarone-indene resin, a phenol-modified coumarone-indene resin, an alkyl-phenol resin or a terpene-phenol resin.

In one preferred embodiment of the present invention the tackifying resin comprises, more preferably consists of, polymers derived from the polymerization of terpene units, sesquiterpene units, diterpene units and/or mixtures thereof. Such units can be aliphatic or alicyclic units, such as monocyclic or bicyclic units; or mixtures thereof. A typical example of this embodiment is a polyterpene resin derived from the catalytic polymerization of the bicyclic monoterpene pinene ($\beta$-pinene). The tackifying resin of this embodiment can be obtained from nature, like plants, or produced by synthetic reaction.

Accordingly, in a further preferred embodiment of the present invention the tackifying resin comprises pine resins, such as rosin resin or rosin ester resin (solid form of pine resin). Preferred rosin ester resins are selected from glycerol esters of rosin and pentaerythritol ester of rosin.

The pine resin is typically a mixture composed mainly of terpenes and derivatives thereof. As mentioned above, pine resins can be plant-derived or of synthetic origin, i.e. the pine resins of this embodiment can be obtained from plants or produced by synthetic reaction. In this embodiment the tackifying resin preferably consists of pine resins such as rosin resins or rosin ester resins.

In a further embodiment, the tackifying resin comprises a partially or fully hydrogenated hydrocarbon resin derived from any of the hydrocarbon resins mentioned above.

Preferably, the tackifying resin comprises, preferably consists of, a partially or fully hydrogenated hydrocarbon resin derived from any of the hydrocarbon resins mentioned above.

A particularly preferred tackifying resin is an aliphatic C5 monomer based resin which is fully hydrogenated.

A further particularly preferred tackifying resin is an aromatic C9 monomer based resin.

A further particularly preferred tackifying resin is a polyterpene resin.

The tackifying resin can be in form of hydrocarbon resin as such (as is) or in form of a master batch, wherein the hydrocarbon resin is mixed with a carrier.

The tackifying resin may optionally include further ingredients like stabilizers as provided by suppliers, as known in the art. The carrier of optional master batch as the hydrocarbon resin product (B) is typically a polymer, e.g. polyolefin, like polypropylene, which is compatible with the component (A).

It is preferred that the tackifying resin is selected from a list consisting of polyterpene resins, rosin resins, rosin ester resins, $C_5$-$C_{10}$ aliphatic hydrocarbon resins, aromatic modified aliphatic resins, or mixtures thereof, more preferably from a list consisting of polyterpene resins, $C_5$ aliphatic hydrocarbon resins, aromatic modified aliphatic resins or mixtures thereof, still more preferably from a list consisting of polyterpene resins, $C_5$ aliphatic hydrocarbon resins or mixtures thereof, and most preferably from polyterpene resins, all as defined above or below.

The tackifying resin preferably has a softening point of 200 °C or less (ASTM-E28), preferably of 180 °C or less. The softening point of the hydrocarbon resin of the hydrocarbon resin product preferably is at or above 70 °C.

In specific embodiments the tackifying resin is liquid at 23°C.

The tackifying resin preferably has a weight average molecular weight of 500-5,000 g/mol, preferably of 700-3,000 g/mol.

The tackifying resin preferably has a melt viscosity of 80-400 mPa.s at 200 °C, more preferably of 100-400 mPa.s at 200 °C, still more preferably of 150-400 mPa.s at 200 °C.

It is preferred that the tackifying resin has a weight average molecular weight of 500-5,000 g/mol, preferably of 700-3,000 g/mol, and has a melt viscosity of 80-400 mPa.s at 200 °C, more preferably of 100-400 mPa.s at 200 °C, still more preferably of 150-400 mPa.s at 200 °C.

The amount of tackifying resin present in the composition according to the invention is generally in the range of 20 to 90 wt%, preferably in the range of 25 to 60 wt%, more preferably in the range of 30 to 50 wt%. A suitable lower limit is 20 wt%, preferably 25 wt%, more preferably 30 wt%. A suitable upper limit is 90 wt%, preferably 60 wt%, more preferably 50 wt%. The lower and upper indicated values of the ranges are included. The percentage of tackifying resin in this composition is calculated based on the total amount of composition.

**Plasticizer resin**

The plasticizer resin comprised in the composition according to the present invention can be selected from: mineral based oil, petroleum based oil, liquid resin, liquid elastomer, polybutene, polyisobutene, phthalate plasticizer, benzoate plasticizer, epoxidized soya oil, vegetal oil, olefin oligomer, low molecular weight polymer, solid plasticizer, wax and mixtures of any of them.

Suitable plasticizer resins are selected from waxes and mineral or petroleum based oils and mixtures thereof.

Suitable waxes are selected from microcrystalline waxes, polyolefin waxes, such as polyethylene waxes and ethylene copolymer waxes, paraffin waxes, ionomer waxes, Fischer-Tropsch waxes, montan-based waxes and mixtures thereof.

The waxes preferably have a softening point of from 30 to 200 °C, more preferably of from 40 to 150 °C.

The microcrystalline waxes preferably have a melt viscosity of not more than 50 mPa·s, more preferably not more than 25 mPa·s, most preferably not more than 20 mPa·s and suitably at least 1 mPa·s, preferably at least 5 mPa·s, determined at 100°C.

The polyolefin waxes, preferably polyethylene waxes, preferably have a melt viscosity of not more than 400 mPa·s, more preferably not more than 350 mPa·s, and suitably at least 20 mPa·s, preferably at least 50 mPa·s, determined at 140°C.

The paraffin waxes preferably have a melt viscosity of not more than 25 mPa·s, more preferably not more than 15 mPa·s, most preferably not more than 10 mPa·s and suitably at least 1 mPa·s, preferably at least 2 mPa·s, determined at 100°C.

Suitable oils are petroleum based oils or mineral based oils, preferably petroleum based hydrocarbon oils, more preferably petroleum based saturated hydrocarbon oils.

The oils preferably have a kinematic viscosity of not more than 100 $mm^2/s$, most preferably not more than 75 $mm^2/s$ and suitably at least 25 $mm^2/s$, preferably at least 50 $mm^2/s$, determined at 40°C.

In one embodiment the plasticizer resin consists of wax as defined above or below.

In another embodiment the plasticizer resin consists of a mixture of wax and oil as defined above or below.

In still another embodiment the plasticizer resin consists of oil as defined above or below.

The amount of plasticizer resin present in the composition according to the invention is generally in the range of 0 to 60 wt%, preferably in the range of 5.0 to 45 wt%, more preferably in the range of 10 to 30 wt%. A suitable lower limit is 0 wt%, preferably 5.0 wt%, more preferably 10 wt%. A suitable upper limit is 60 wt%, preferably 45 wt%, more preferably 30 wt%. The lower and upper indicated values of the ranges are included. The percentage of plasticizer resin in this composition is calculated based on the total amount of composition.

**Filler**

Examples of fillers suitable to be comprised in the composition according to the present invention include, but are not limited to talc, calcium carbonate, calcium sulphate, clay, kaolin, silica, glass, fumed silica, mica, wollastonite, feldspar, aluminium silicate, calcium silicate, alumina, hydrated alumina such as alumina trihydrate, glass microsphere, ceramic microsphere, wood flour, marble dust, magnesium oxide, magnesium hydroxide, antimony oxide, zinc oxide, barium sulphate and/or titanium dioxide. Here and hereinafter mineral modifiers are comprised in the term filler. The person skilled in the art of compositions can without undue burden easily determine the most appropriate amount of components in the composition for a certain application.

The amount of filler present in the composition according to the invention is generally in the range of 0 to 50 wt%, preferably in the range 0.5 to 40 wt%, more preferably in the range of 1.0 to 30 wt%. A suitable lower limit is 0 wt%, preferably 0.5 wt%, more preferably 1.0 wt%. A suitable upper limit is 50 wt%, preferably 40 wt%, more preferably 30 wt%. The lower and upper indicated values of the ranges are included. The percentage of filler in this composition is calculated based on the total amount of composition.

**Additives**

Examples of additives that can be used in the composition according to the present invention include, but are not limited to, stabilizers such as antioxidants (for example sterically hindered phenols, phosphites/phosphonites, sulphur containing antioxidants, alkyl radical scavengers, aromatic amines, hindered amine stabilizers, or blends thereof), metal deactivators (for example Irganox™ MD 1024), or UV stabilizers (for example hindered amine light stabilizers). Other typical additives are modifiers such as antistatic or antifogging agents (for example ethoxylated amines and amides or glycerol esters), acid scavengers (for example Ca-stearate), blowing agents, cling agents (for example polyisobutene), lubricants and resins , nucleating agents (for example benzoates, phosphorous-based compounds, sorbitols, nonitol-based compounds or amide-based compounds), as well as slip and antiblocking agents (for example erucamide, oleamide, natural silica and synthetic silica or zeolites) and mixtures thereof.

The amount of additives present in the composition according to the invention is generally in the range of 0 to 5.0 wt%, preferably in the range 0.1 to 4.0 wt%, more preferably in the range of 0.15 to 3.0 wt%, most preferably in the range of 0.2 to 2.0 wt%. A suitable lower limit is 0 wt%, preferably 0.1 wt%, more preferably 0.15 wt%, most preferably 0.2 wt%. A suitable upper limit is 5.0 wt%, preferably 4.0 wt%, more preferably 3.0 wt%, most preferably 2.0 wt%. The lower and upper indicated values of the ranges are included. The percentage of additives in this composition is calculated based on the total amount of composition.

**Process**

The present invention is also concerned with a process to prepare a composition according to the invention by combining the polypropylene resin (A) with the tackifying resin (B) and optionally one or more, preferably all of the plasticizing resin (C), the filler (D) and the additives (E).

The inventive composition can be prepared using any of the techniques known by the person skilled in the art. An illustrative example of the composition preparation is a mixing procedure involving the placement of all the components, except the polypropylene copolymer in a jacketed mixing reactor equipped with a rotor and thereafter applying a temperature in a range of 149 °C to 190 °C to melt the components placed in the jacketed mixing reactor. It should be understood that the precise temperature to be used in this preparation step should depend on the melting points of the particular components. The polymeric component(s) of the polypropylene resin is/are subsequently introduced in the jacked mixing reactor under agitation allowing the mixing to continue until a consistent and uniform mixture is formed. The composition preparation may be carried out under inert atmosphere, by using an inert gas such as carbon dioxide or nitrogen, in order to protect said composition.

The resulting composition may then be applied to substrates using a variety of coating techniques. Examples of coating techniques are: hot-melt slot die coating, hot-melt wheel coating, hot-melt roller coating, melt-blown coating and spiral spray coating. Any application temperature at which the composition is applied on a substrate, above the softening point of the composition is suitable. The softening point of a material is the temperature at which a material softens sufficiently to allow significant flow under a low stress. For the composition according to this invention, the application temperature is preferably selected to be above the melting point of the main polypropylene copolymer component. Alternatively, the application temperature can be selected to be above the melting point of the polypropylene copolymer component with the highest melting point in the composition. A suitable application temperature range for the composition would be between 120 °C and 220 °C depending on the type of propylene random copolymer (R-PP) comprised in such composition. Preferably the application temperature is selected to be in the range from 1 °C to 30 °C, more preferably in a range from 2 °C to 25 °C, preferably in a range from 3 °C to 20 °C above the melting point of the propylene random copolymer component with the highest melting point in the composition.

The substrate can be made out of one or more different substrate materials, for example nonwoven material, polymeric material, elastomeric material, wood, glass, paper, carton, concrete and ceramic material. The substrate can be in the form of for example a fiber, a film, a thread, a strip, a coating, a foil, a sheet, a board, a plate and a band. Any substrate material and any substrate form could be used in any combination possible with the composition serving to bond two or more substrates together.

**Article**

The present invention is further concerned with an article comprising the composition according to the invention and at least one substrate, wherein the composition is in direct contact with at least one surface of said substrate.

Such article comprising the composition according to the invention and the at least one substrate can be used in several applications. Illustrative applications of such an article include, but are not limited to, medical application, construction application, nonwoven material application, food or general packaging application, bookbinding application, bottle labelling application and pressure sensitive application.

Such article comprising the composition according to the invention and at least one substrate can be chosen from a disposable diaper, a sanitary napkin, a bed pad, a bandage, a surgical drape, a tape, a film, a label, a sheet (for example a plastic, a paper or a nonwoven sheet), a bottle (for example a plastic or glass bottle), a can, a board (for example a cardboard or a wooden board), a case, a wooden part, a book, a bag, a surgical drape, a surgical device, a medical device, a filter or a package (for example a box or a container). Preferred articles according to the invention are tapes, films, books and medical devices.

Preferably, when the substrate of the article is an untreated polypropylene film, the composition has a T-peel strength of at least 5 N/m, more preferably of at least 15 N/m and most preferably of at least 24 N/m.

In some embodiments the T-peel strength is at least 40 N/m or even of at least 100 N/m. Thereby, the T-peel strength usually does not exceed 300 N/m.

Preferably, when the substrate of the article is an atmospheric pressure plasma jet (APPJ) surface treated polypropylene film, the composition has a T-peel strength of at least 20 N/m, more preferably of at least 30 N/m and most preferably of at least 50 N/m.

In some embodiments the T-peel strength is at least 100 N/m or even of at least 150 N/m. Thereby, the T-peel usually does not exceed 350 N/m.

Preferably, when the substrate of the article is a polypropylene film with a thickness of 300 $\mu$m, the composition has a single-lap shear strength of from 0.05 to 0.4 MPa.

Preferably, when the substrate of the article is a steel substrate, the composition has a single-lap shear strength of from 0.5 to 4.0 MPa.

The present invention is also concerned with a process to produce an article according to the invention wherein the process comprises at least the step of applying at least one composition according to the invention on at least one surface of the at least one substrate.

Finally the present invention is also directed to the use of the composition according to the invention in the preparation of an article according to the invention.

## Examples

### 1. Measuring Methods

The following definitions of terms and determination methods apply for the above general description as well as for the below examples unless otherwise defined.

### a) Melt flow rate

The melt flow rate ($MFR_2$) is determined according to ISO 1133 and is indicated in g/10min.

The $MFR_2$ is an indication of the flowability and hence the processability of the polymer. The higher the melt flow rate, the lower the viscosity of the polymer. The $MFR_2$ of polypropylene is determined at a temperature of 230 °C and under a load of 2.16 kg.

### b) Density

The density is measured according to ISO 1183D. The samples preparation is carried out by compression moulding according to ISO 1872-2:2007.

### c) Comonomer contents

Quantitative nuclear-magnetic resonance (NMR) spectroscopy was used to quantify the comonomer content of the polymers.

### Comonomer content quantification of poly(propylene-co-ethylene) copolymers

Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All NMR spectra were recorded using a $^{13}C$ optimised 10 mm extended temperature probe head at 125°C using nitrogen gas for all pneumatics. Approximately 200 mg of material was dissolved in 3 ml of *1,2*-tetrachloroethane-$d_2$ (TCE-$d_2$) along with chromium-(III)-acetylacetonate (Cr(acac)$_3$) resulting in a 65 mM solution of relaxation agent in solvent {8}. To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme {3, 4}. A total of 6144 (6k) transients were acquired per NMR spectra.

Quantitative $^{13}$C{$^{1}$H} NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed {7}.

The comonomer fraction was quantified using the method of Wang et. al. {6} through integration of multiple signals across the whole spectral region in the $^{13}$C{$^{1}$H} spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5 \ ( \ S\beta\beta + S\beta\gamma + S\beta\delta + 0.5( \ S\alpha\beta + S\alpha\gamma))$$

Through the use of this set of sites the corresponding integral equation becomes:

$$E = 0.5 \ ( \ I_H + I_G + 0.5( \ I_C + I_D \ ))$$

using the same notation used in the article of Wang et al. {6}. Equations used for absolute propylene content were not modified.

The mole percent comonomer incorporation was calculated from the mole fraction:

$$E \ [mol\%] = 100 * fE$$

The weight percent comonomer incorporation was calculated from the mole fraction:

$$E \ [wt\%] = 100 * ( \ fE * 28.06 \ ) / ( \ (fE * 28.06) + ((1-fE) * 42.08) \ )$$

Bibliographic references:

1- Busico, V., Cipullo, R., Prog. Polym. Sci. 26 (2001) 443.
2- Busico, V., Cipullo, R., Monaco, G., Vacatello, M., Segre, A.L., Macromoleucles 30 (1997) 6251.
3- Zhou, Z., Kuemmerle, R., Qiu, X., Redwine, D., Cong, R., Taha, A., Baugh, D. Winniford, B., J. Mag. Reson. 187 (2007) 225.
4- Busico, V., Carbonniere, P., Cipullo, R., Pellecchia, R., Severn, J., Talarico, G., Macromol. Rapid Commun. 2007, 28, 1128.
5- Resconi, L., Cavallo, L., Fait, A., Piemontesi, F., Chem. Rev. 2000, 100, 1253.
6- Wang, W-J., Zhu, S., Macromolecules 33 (2000), 1157.
7- Cheng, H. N., Macromolecules 17 (1984), 1950.
8- Singh, G., Kothari, A., Gupta, V., Polymer Testing 28 5 (2009), 475.
9- Kakugo, M., Naito, Y., Mizunuma, K., Miyatake, T. Macromolecules 15 (1982) 1150.
10- Randall, J. Macromol. Sci., Rev. Macromol. Chem. Phys. 1989, C29, 201.

**Comonomer content poly(propylene-co-ethylene-co-butene)**

Quantitative $^{13}$C{$^{1}$H} NMR spectra recorded in the molten-state using a Bruker Advance III 500 NMR spectrometer operating at 500.13 and 125.76 MHz for $^{1}$H and $^{13}$C respectively. All NMR spectra were recorded using a $^{13}$C optimised 7 mm magic-angle spinning (MAS) probe head at 180°C using nitrogen gas for all pneumatics. Approximately 200 mg of material was packed into a 7 mm outer diameter zirconia MAS rotor and spun at 4.5 kHz. This setup was chosen primarily for the high sensitivity needed for rapid identification and accurate quantification{1, 2, 6}. Standard single-pulse excitation was employed utilising the NOE at short recycle delays{3, 1} and the RS-HEPT decoupling scheme{4, 5}. A total of 1024 (1k) transients were acquired per spectra.

Quantitative $^{13}$C{$^1$H} NMR spectra were processed, integrated and relevant quantitative properties determined from the integrals. All chemical shifts are internally referenced to the methyl isotactic pentad (*mmmm*) at 21.85 ppm.

Characteristic signals corresponding to regio defects were not observed {11}. The amount of propene was quantified based on the main S$\alpha\alpha$ methylene sites at 44.1 ppm:

$$Ptotal = I_{S\alpha\alpha}$$

Characteristic signals corresponding to the incorporation of 1-butene were observed and the comonomer content quantified in the following way. The amount isolated 1-butene incorporated in PPBPP sequences was quantified using the integral of the $\alpha$B2 sites at 44.1 ppm accounting for the number of reporting sites per comonomer:

$$B = I_{\alpha B2} / 2$$

The amount consecutively incorporated 1-butene in PPBBPP sequences was quantified using the integral of the $\alpha\alpha$B2 site at 40.5 ppm accounting for the number of reporting sites per comonomer:

$$BB = 2 * I_{\alpha\alpha B2}$$

The total 1-butene content was calculated based on the sum of isolated and consecutively incorporated 1-butene:

$$Btotal = B + BB$$

The total mole fraction of 1-butene in the polymer was then calculated as:

$$fB = ( Btotal / ( Etotal + Ptotal + Btotal )$$

Characteristic signals corresponding to the incorporation of ethylene were observed and the comonomer content quantified in the following way. The amount isolated ethylene incorporated in PPEPP sequences was quantified using the integral of the S$\alpha\gamma$ sites at 37.9 ppm accounting for the number of reporting sites per comonomer:

$$E = I_{S\alpha\gamma} / 2$$

With no sites indicative of consecutive incorporation observed the total ethylene comonomer content was calculated solely on this quantity:

$$Etotal = E$$

The total mole fraction of ethylene in the polymer was then calculated as:

$$fE = ( Etotal / ( Etotal + Ptotal + Btotal )$$

The mole percent comonomer incorporation was calculated from the mole fractions:

$$B\ [mol\%] = 100 * fB$$

$$E\ [mol\%] = 100 * fE$$

The weight percent comonomer incorporation was calculated from the mole fractions:

$$B\ [wt\%] = 100 * (\ fB * 56.11\ ) / (\ (fE * 28.05) + (fB * 56.11) + ((1-(fE+fB)) * 42.08)\ )$$

$$E\ [wt\%] = 100 * (\ fE * 28.05\ ) / (\ (fE * 28.05) + (fB * 56.11) + ((1-(fE+fB)) * 42.08)\ )$$

Bibliographic references:

1-Klimke, K., Parkinson, M., Piel, C., Kaminsky, W., Spiess, H.W., Wilhelm, M., Macromol. Chem. Phys. 2006;207:382.
2-Parkinson, M., Klimke, K., Spiess, H.W., Wilhelm, M., Macromol. Chem. Phys. 2007;208:2128.
3-Pollard, M., Klimke, K., Graf, R., Spiess, H.W., Wilhelm, M., Sperber, O., Piel, C., Kaminsky, W., Macromolecules 2004;37:813.
4-Filip, X., Tripon, C., Filip, C., J. Mag. Resn. 2005, 176, 239.
5-Griffin, J.M., Tripon, C., Samoson, A., Filip, C., and Brown, S.P., Mag. Res. in Chem. 2007 45, S1, S198.
6-Castignolles, P., Graf, R., Parkinson, M., Wilhelm, M., Gaborieau, M., Polymer 50 (2009) 2373.
7-Busico, V., Cipullo, R., Prog. Polym. Sci. 26 (2001) 443.
8-Busico, V., Cipullo, R., Monaco, G., Vacatello, M., Segre, A.L., Macromoleucles 30 (1997) 6251.
9-Zhou, Z., Kuemmerle, R., Qiu, X., Redwine, D., Cong, R., Taha, A., Baugh, D. Winniford, B., J. Mag. Reson. 187 (2007) 225.
10-Busico, V., Carbonniere, P., Cipullo, R., Pellecchia, R., Severn, J., Talarico, G., Macromol. Rapid Commun. 2007, 28, 1128.
11-Resconi, L., Cavallo, L., Fait, A., Piemontesi, F., Chem. Rev. 2000, 100, 1253.

**d) DSC analysis**

The melting temperature ($T_m$) and the crystallisation temperature ($T_c$) were measured in TA Q2000 differential scanning calorimetry instrumente (DSC) according to ISO 11357/3 on 5 to 10 mg samples. Crystallisation ($T_c$) and melting temperatures ($T_m$) were obtained in a heat/cool/heat cycle with a scan rate of 10 °C/min between 30 °C and 225 °C. Melting ($T_m$) and crystallisation ($T_c$) temperatures were taken as the peaks of the endotherms and exotherms in the the second heating cycle and cooling cycle respectively.

**e) Dynamic Mechanical Thermal Analysis (DMTA)**

The storage modulus G', loss modulus G" and the glass transition temperature $T_g$ were measured by DMTA analysis. The DMTA evaluation and the storage modulus G' measurements were carried out in torsion mode on compression moulded samples at temperature between -130 °C and +150 °C using a heating rate of 2 °C/min and a frequency of 1 Hz, according to ISO 6721-02 and ISO 6721-07. The measurements were carried out using Anton Paar MCR 301 equipment. The compressed moulded samples have the following dimensions: 40x10x1 mm and are prepared in accordance to ISO 1872-2:2007. The storage modulus G'23 and G'70 were measured at 23 °C and 70 °C respectively.

**f) Vicat-A temperature**

The Vicat-A temperature is determined according to ISO 306 (A50) using injection moulded test specimens having the following dimensions: 80x10x4 mm. The injection moulded test specimens are prepared as described in EN ISO 1873-2.

**g) Tensile properties**

The tensile properties, the elongation at break (EAB), elongation at yield (EAY), tensile strength at break (TSB) and tensile strength at yield (TSY) were measured at 23 °C according to ISO 527-1:2012/ ISO 527-2:2012 on injection moulded specimens, type 1B, prepared according to ISO 527-2:2012 and using an extensometer (Method B) produced according to ISO 1873-2 with 4 mm sample thickness. The test speed was 50 mm/min, except for the tensile modulus (E) measurement which was carried out at a test speed of 1 mm/min.

**h) Flexibility**

The flexibility value is calculated according to the equation below:

$$Flexibility = EAY * 100000/(TSY * E)$$

wherein:

EAY is the elongation at yield value,
TSY is the tensile strength at yield value, in MPa and E is the tensile modulus value, in MPa.

**i) Melt viscosity**

Melt viscosity is measured according to ASTM D-3236.

**j) Brookfield melt viscosity**

The Brookfield viscosity was measured in a Brookfield RD DV-I viscometer coupled to Brookfield Thermosel device (Brookfield Engineering Laboratories Inc. Stoughton, USA). SC4-27 spindle was used. The measurements were performed according to ASTM D3236-88. The range of shear rates used in the measurements was 0.17 to 34 $s^{-1}$.
The measurements were made by placing 8.4 g of the composition into a cylindrical aluminium container which was placed into the Thermosel heating unit. Once the sample was melted, the SC4-27 spindle was introduced and after 15 min for stabilization of the temperature, the measurement was carried out. Three replicates per sample were carried out and averaged.
Brookfield viscosities at 150°C, 160°C and 180°C were measured.

**k) Probe tack**

The probe tack of the samples was measured at different temperatures. The samples were placed on PP film (thickness: 150 $\mu$m) pieces of dimension 6 cm x 6 cm supported by means of double side tape (Miarco, Paterna, Spain) on stainless steel 304 plate having the same dimensions. Three pieces of Scotch tape (3M, Minnesota, USA) were placed over the sides of the PP film for adjusting the thickness to 200 $\mu$m. Around 0.1-0.2 g sample melted at 180°C was applied on the square area in PP film and the piece was placed in oven at 100 °C for five minutes until homogeneous melting was produced. Then, the piece was covered with Teflon® film and placed in pneumatic press Muver (Francisco Muñoz Irles CB, Petrer, Alicante) heated at 100 °C and pressed at 4 kg/cm² for 10 seconds. Under these conditions the thickness of the test sample was about 200 $\mu$m. The adhesive thickness was measured with Minitest 735 probe (ElektroPhysik, Cologne, Germany).
The probe tack of the samples was measured in TA-XT2i texture analyzer (Stable Micro Systems, Surrey, England) provided with a thermostatic chamber. Measurements were carried out by increasing the temperature in steps of 5 °C by using cylindrical end-flat steel probe rod of 3 mm diameter. Three replicates per measurement were carried out and averaged.
The end-flat stainless steel cylindrical probe was approached to the sample surface at a rate of 0.1 mm/s. Once the probe was in contact with the surface, a force of 5 N was applied during 1 second, and then the probe was removed from the sample surface at 10 mm/s. Tack was taken at the maximum of the Strength (N) over Strain (mm) curve.

**1) Shear strength**

Adhesion under shear stresses was obtained by single lap-shear test of stainless steel 304/sample/stainless steel 304 and PP film (300 $\mu$m)/ sample/PP film (300 $\mu$m) joints.

• Single lap-shear test of stainless steel 304/sample/stainless steel 304 joints:

The dimensions of the stainless steel 304 specimens were 3 cm x 15 cm. The area in which the sample was applied was 900 mm² (30 x 30 mm). Before adhesive application, for removing grease and contaminants, the stainless steel test samples were roughened with green Scotch-Brite scourer (3M, Minnesota, USA) and then they were cleaned with isopropanol, allowing the solvent to evaporate for 30 minutes.

For making the joints, hot plate was heated at 180 °C and one stainless steel test sample was placed on top and, later, 0.15 g sample was applied. Once the adhesive was melted, the other stainless steel test sample was applied on top and a weight of 2 kg (equivalent to a pressure of 21.8 kPa) was placed on the joint for 1 minute for obtaining the adhesive joint.

Single lap-shear test was measured in universal testing machine Instron 4410 (Buckinghamshire, England) by using a pulling rate of 5 mm/min. Five replicates for each joint made with each hot melt were carried out and averaged. The loci of failure of the joints were assessed by visual inspection.

• Single lap-shear test of PP film (300 $\mu$m)/sample/PP film (300 $\mu$m) joints:

The dimensions of the PP film specimens were 3 cm x 10 cm. The area in which the hot melt was applied was 900 mm$^2$ (30 x 30 mm). Before adhesive application, for removing contaminants, PP films were cleaned with isopropanol, allowing the solvent to evaporate for 30 minutes. 0.15 g hot melts were placed on PP film and was introduced in oven at 100 °C during 5 minutes. Once the hot melt was completely melted, the other PP film was applied on top and pressed in Muver 5056 pneumatic press (Francisco Muñoz Irles CB, Petrer, Alicante) at 4 kg/cm$^2$ and 100 °C for 10 seconds.

Single lap-shear test was measured in universal testing machine Instron 4410 (Buckinghamshire, England) by using a pulling rate of 5 mm/min. Five replicates for each joint made with each hot melt were carried out and averaged. The loci of failure of the joints were assessed by visual inspection.

**m) T-peel test**

Adhesion under peel stresses was measured by T peel tests of PP film/sample/PP film joints. HC205TF PP films of 300 $\mu$m thick (Borealis AG, Linz, Austria) of dimensions 3 cm x 14 cm were used. The adhesive was applied on a surface of 3 cm wide and 10 cm long, leaving 4 cm unglued for facilitating the plying during T peel test. In order to optimize adhesion, PP films were surface treated with atmospheric pressure plasma jet.

• Surface treatment of PP film substrates

The surface treatment of PP film (300 $\mu$m) was carried out in Plasma Treat GmbH (Steinhagen, Germany) atmospheric pressure plasma jet (APPJ) device, operating at frequency of 17 kHz and high tension of 20 kV. APPJ system is provided with torch ending in rotating nozzle through which plasma species are expelled. The system contains an electronically speed-controlled platform, where PP film (300 $\mu$m) is placed. The dimensions of the PP film (300 $\mu$m) test samples were 3 cm x 14 cm. Before APPJ treatment, PP film (300 $\mu$m) was cleaned with isopropanol for removing grease and contaminants. 10 minutes later, PP film (300 $\mu$m) was placed over the steel plate of APPJ equipment.

Non-equilibrium discharge air plasma was generated at a pressure of 2 bars inside the rotating nozzle (1,900 rpm) (Figure 3.20b) and expelled through a circular orifice onto PP film (300 $\mu$m) surface. APPJ treatment of PP film (300 $\mu$m) was carried out at speed of the platform of 2 m/min and distance of 1 cm between PP film (300 $\mu$m) surface and the plasma torch nozzle. Two consecutive APPJ passes were carried out.

For assessing the effectiveness of APPJ treatment of PP film (300 $\mu$m), water contact angles were measured in ILMS 377 goniometer (GBX Instruments, Bourg de Pèage, France) and droplet shape was analyzed with Digidrop® software. Droplets of 4 $\mu$L of ultrapure water were placed on the PP film (300 $\mu$m) surface, stabilizing the droplet for 30 seconds before measurement. The measurements were carried out at 25 °C and 40 % relative humidity, and at least five droplets of ultrapure water were placed on different zones of the same PP film (300 $\mu$m) surface, and the contact angles were measured on both sides of the droplets, averaging the results.

The durability of APPJ treated PP film is limited due to hydrophobic recovery. Therefore, the evolution of the water contact angle on APPJ treated PP film (300 $\mu$m) was monitored as a function of the time after APPJ treatment. The water contact angle on APPJ treated PP film (300 $\mu$m) does not change during 150 minutes (2h30min), but a sudden increase is produced after 4h30min. Therefore, the adhesive joints must be made in less than 2h30min after APPJ treatment of PP film (300 $\mu$m).

• T-peel adhesion test

The adhesion properties of the samples were evaluated through T-peel tests of APPJ treated PP film (300 $\mu$m)/sample/APPJ treated PP film (300 $\mu$m) joints. About 0.5-0.7 g of sample were placed over an area of 3 cm x 10 cm of APPJ treated PP film (300 $\mu$m). Afterwards, the specimen was introduced into oven at 100 °C during 5 minutes. Then, the other APPJ treated PP (300 $\mu$m) piece was applied on top. For making adequate APPJ PP film (300 $\mu$m)/sample/APPJ treated PP film (300 $\mu$m) joints, they were placed between two stainless steel 304 plates covered with Teflon® film (for avoiding the sticking of the excess adhesive on the stainless steel plate surface) and pressed at 100 °C and 4 kg/cm$^2$ for 10 seconds in Muver 5056 pneumatic press (Francisco Muñoz Irles CB, Petrer, Alicante). The thicknesses of the adhesives in the joints were between 49 and 73 $\mu$m.

T-peel test was carried out in universal testing machine Instron 4411 (Buckinghamshire, England) and the pulling rate was 152 mm/min. Five replicates for each joint were carried out and averaged. The loci of failure of the joints were assessed by visual inspection.

**n) Softening point**

The softening point was measured in a Mettler Toledo FP900 Thermo System (Mettler Toledo GmbH Schwerzenbach, Germany) equipped with a FP83 drop-point cell in accordance with ASTM-E28.

The samples were placed in small cup-shaped holders of 6.35 mm diameter. A first heating sweep at a heating rate of 5 °C/min was carried out and afterwards another heating scan at a heating rate of 1 °C/min by beginning 5 °C below the softening point of the sample was carried out. Three replicates per sample were carried out and averaged.

**o) Open time**

Open time was measured by using an in-house procedure developed at Adhesion and Adhesives Laboratory of University of Alicante. Pieces of cardboard with dimensions of 3 cm x 7 cm were plied by the middle; pieces of the same dimensions of PP film (150 $\mu$m) were attached on the surface of the plied cardboard. PP or sample was melted into cylindrical aluminum container which was placed inside Thermosel heating unit at 180 °C. After 5 minutes, about 0.1 g of PP or hot melt melted at 180 °C was placed on the lower part of the plied PP/cardboard surface and the joint was pressed mildly at different times and left drop freely. The open time was taken as the time at which the joint does not open.

**2. Experimental part**

**2.1 Components of the adhesive compositions**

**a) Multimodal propylene random copolymer 1 (R-PP-1)**

The multimodal propylene copolymer was polymerized in a Borstar pilot plant with a loop reactor / gas phase reactor combination using the catalyst and polymerization conditions as described for example IE-2 of EP 2 999 721. In the loop reactor a propylene-ethylene random copolymer with an ethylene content of 4.0 mol% was polymerized. The total ethylene content of the multimodal propylene-ethylene random copolymer after gas phase polymerization is 5.2 mol%. The powder of the multimodal propylene ethylene random copolymer leaving the gas phase reactor has a MFR$_2$ of 40 g/10 min. The powder was compounded together with antioxidants and peroxide Triganox 101 in a twin screw extruder and thereby visbroken. The amount of peroxide was adapted to obtain a final MFR$_2$ of 165 g/10 min. The bimodal propylene ethylene random copolymer (R-PP-1) has a Tm of 143 °C, $\Delta$Hm of 78 J/g, Tc of 101°C and a tensile modulus of 900 MPa.

**b) Multimodal propylene random copolymer 2 (R-PP-2)**

As second multimodal propylene random copolymer R-PP-2 RJ901MO, commercially available from Borealis AG was used. RJ901MO is a bimodal propylene-ethylene copolymer with a density of 905 kg/m$^3$, a melt flow rate MFR$_2$ of 110 g/10 min and a tensile modulus of 1,050 MPa.

**c) Propylene copolymer (PC)**

As propylene copolymer (PC) the heterophasic propylene copolymer with a propyleneethylene random copolymer as matrix phase and an ethylene-propylene elastomeric phase dispersed therein as produced according to example IE-4 of WO 2017/017136 is used.

**d) Tackifying resins**

The following commercially available resins are used as tackifying resins:

- Foralyn 90 - Glycerol rosin ester (hydrogenated) with a softening point of 103 °C, commercially available from Eastman, Brussels, Belgium; abbr. F90

- Escorez 1102 - aliphatic (C5) hydrocarbon resin with a softening point of 100 °C, commercially available from Eastman, Brussels, Belgium; abbr. E1102
- Piccolyte C115, polyterpene resin with a softening point of 112-118 °C, commercially available from Eastman, Brussels, Belgium; abbr. PC115
- Piccolyte A115 - polyterpene resin with a molecular weight of 790 g/mol and a softening point of 112-118 °C, commercially available from Pinova, Brunswick, USA; abbr. A115
- Piccotac 8090-E (Eastman) - aromatic modified aliphatic (C5/C9) hydrocarbon resin with a weight average molecular weight Mw of 1,900 g/mol and a softening point of 88-96 °C, commercially available from Eastman, Brussels, Belgium; abbr. P8090-E
- Piccotac 1095-N (Eastman) - aliphatic (C5) hydrocarbon resin with a weight average molecular weight Mw of 2,000 g/mol, being liquid at 23 °C, commercially available from Eastman, Brussels, Belgium; abbr. P1095-N

**e) Plasticizer resin**

- Inter 3078, microcrystalline wax with a softening point of 78-85 °C and a melt viscosity of 12 mPa.s at 100°C, commercially available from Iberceras Speciaties, Madrid, Spain; abbr. M
- Licowax PE 130 GR, polyethylene wax with a softening point of 127-132 °C and a melt viscosity of 350 mPa.s at 140°C, commercially available from Clariant, Muttenz, Switzerland; abbr. PE-350
- Licocene PE 4201 P, polyethylene wax with a softening point of 125-130 °C and a melt viscosity of 60 mPa.s at 140°C, commercially available from Clariant, Muttenz, Switzerland; abbr. PE-60
- Primol 352, white oil - mixture of liquid saturated hydrocarbons with a kinematic viscosity at 40 °C of 67 mm2/s, commercially available from ExxonMobil, Irving, USA; abbr. P352

**f) Additives**

- Irganox 1010, antioxidant, commercially available from BASF SE

**2.2 Preparation of the hot melt adhesive compositions**

Pyrex® glass beaker covered with glass lid was placed on hot plate surrounded by ceramic blanket. One of the entries of the glass lid was connected to dry nitrogen and another one was used for the stirring rod; the other 2 entries were closed. The
temperature inside the glass beaker was set to 200 °C (constant temperature throughout the synthesis) and maintained under dry $N_2$ atmosphere for 6 minutes. The predetermined amounts of propylene copolymer and antioxidant was added first, and once melted at 200 °C under dry nitrogen atmosphere, then the predetermined amount of random copolymer was added. After complete softening of the mixture, the predetermined amounts of tackifier and plasticizer were added. Then, the mixture was stirred at 80 rpm and 200 °C during 45 minutes. After cooling down, the hot melt adhesive composition was obtained. The percentages of propylene random copolymer (R-PP-1/2), propylene copolymer (PC) and the other components used in the preparation of the hot-melt adhesive compositions are listed in Tables 1, 2, 3 and 4.

Table 1: Amount of components of the hot melt adhesive compositions Ex1-6 in % by weight

|          | Ex1   | Ex2   | Ex3   | Ex4   | Ex5   | Ex6   |
|----------|-------|-------|-------|-------|-------|-------|
| R-PP-1   | 19.9  | 19.9  | 19.9  | 19.9  | 19.9  | 19.9  |
| PC       | 9.95  | 9.95  | 9.95  | 9.95  | 9.95  | 9.95  |
| F90      | 49.75 | ---   | ---   | ---   | ---   | ---   |
| E1102    | ---   | 49.75 | ---   | ---   | ---   | ---   |
| PC115    | ---   | ---   | 49.75 | ---   | ---   | ---   |
| A115     | ---   | ---   | ---   | 49.75 | ---   | ---   |
| P8090-E  | ---   | ---   | ---   | ---   | 49.75 | ---   |

(continued)

| | Ex1 | Ex2 | Ex3 | Ex4 | Ex5 | Ex6 |
|---|---|---|---|---|---|---|
| P1095-N | --- | --- | --- | --- | --- | 49.75 |
| M | 19.9 | 19.9 | 19.9 | 19.9 | 19.9 | 19.9 |
| Irganox 1010 | 0.5 | 0.5 | 0.5 | 0.5 | 0.5 | 0.5 |

Table 2: Amount of components of the hot melt adhesive compositions Ex7-11 in % by weight

| | Ex7 | Ex8 | Ex9 | Ex10 | Ex11 |
|---|---|---|---|---|---|
| R-PP-1 | 26.46 | 26.46 | 26.46 | 26.46 | 26.46 |
| PC | 13.23 | 13.23 | 13.23 | 13.23 | 13.23 |
| E1102 | 39.8 | --- | --- | --- | --- |
| PC115 | --- | 39.8 | --- | --- | --- |
| A115 | --- | --- | 39.8 | --- | --- |
| P8090-E | --- | --- | --- | 39.8 | --- |
| P1095-N | --- | --- | --- | --- | 39.8 |
| M | 19.9 | 19.9 | 19.9 | 19.9 | 19.9 |
| Irganox 1010 | 0.5 | 0.5 | 0.5 | 0.5 | 0.5 |

Table 3: Amount of components of the hot melt adhesive compositions Ex12-15 in % by weight

| | Ex12 | Ex13 | Ex14 | Ex15 |
|---|---|---|---|---|
| R-PP-1 | 26.46 | 26.46 | 26.46 | 26.46 |
| PC | 13.23 | 13.23 | 13.23 | 13.23 |
| PC115 | 39.8 | 39.8 | --- | --- |
| A115 | --- | --- | 39.8 | 39.8 |
| PE-350 | 19.9 | --- | 19.9 | --- |
| PE-60 | --- | 19.9 | --- | 19.9 |
| Irganox 1010 | 0.5 | 0.5 | 0.5 | 0.5 |

Table 4: Amount of components of the hot melt adhesive compositions Ex16-18 in % by weight

| | Ex16 | Ex17 | Ex18 |
|---|---|---|---|
| R-PP-2 | 26.46 | 26.46 | 26.46 |
| PC | 13.23 | 13.23 | 13.23 |
| A115 | 39.8 | 39.8 | 39.8 |
| M | 19.9 | 14.9 | --- |
| P352 | --- | 4.9 | 19.9 |
| Irganox 1010 | 0.5 | 0.5 | 0.5 |

**2.3 Measurement of the probe tack of the hot melt adhesive compositions Ex1-18**

The probe tack of the above listed hot melt adhesive compositions Ex1-18 is measured as described above under Measuring Methods.

The components of the polypropylene resin used in the hot melt adhesive compositions R-PP-1/2 and PC have the following maximum probe tack and $T_{max\ tack}$ as listed in Table 5:

Table 5: Maximum probe tack and $T_{max\ tack}$ of R-PP-1/2 and PC used in the hot melt adhesive compositions

|  | Maximum Tack [kPa] | $T_{max\ tack}$ [°C] |
|---|---|---|
| R-PP-1 | < 1 | 120 |
| P-PP-2 | < 1 | 100 |
| PC | 75 | 125 |

The hot melt adhesive compositions of Examples Ex1-Ex18 have the following following maximum probe tack, $T_{max\ tack}$ and temperature range, in which tack occurs, as listed in Tables 6-8. Thereby, in Table 6 examples Ex1-6 having an overall polypropylene resin content of about 30 wt% are shown. In Table 7 examples Ex7-11 having an overall polypropylene resin content of about 40 wt% are shown. Table 8 shows a probe tack comparison of examples Ex8, 9 and 11-15, which differ in their plasticizer. Table 9 shows a probe tack comparison of examples Ex9 and 16-18, which differ in their propylene random copolymer. Ex 17 and 18 additionally include oil as plasticiser.

Table 6: Maximum probe tack, $T_{max\ tack}$ and temperature range, in which tack occurs of the hot melt adhesive compositions Ex1-6

|  | Maximum probe tack [kPa] | $T_{max\ tack}$ [°C] | T-range [°C] |
|---|---|---|---|
| Ex1 | 336 | 85 | 55-100 |
| Ex2 | 487 | 80 | 40-100 |
| Ex3 | 770 | 70 | 45-100 |
| Ex4 | 929 | 80 | 50-100 |
| Ex5 | 635 | 75 | 60-100 |
| Ex6 | 642 | 65 | 35-100 |

Table 7: Maximum probe tack, $T_{max\ tack}$ and temperature range, in which tack occurs of the hot melt adhesive compositions Ex7-11

|  | Maximum probe tack [kPa] | $T_{max\ tack}$ [°C] | T-range [°C] |
|---|---|---|---|
| Ex7 | 202 | 90 | 50-100 |
| Ex8 | 599 | 70 | 40-100 |
| Ex9 | 787 | 65 | 35-100 |
| Ex10 | 560 | 65 | 35-100 |
| Ex11 | 451 | 70 | 45-100 |

Table 8: Maximum probe tack, $T_{max\ tack}$ and temperature range, in which tack occurs of the hot melt adhesive compositions Ex8, 9, 12-15

|  | Maximum probe tack [kPa] | $T_{max\ tack}$ [°C] | T-range [°C] |
|---|---|---|---|
| Ex8 | 599 | 70 | 40-100 |
| Ex12 | 55 | 115 | 75-120 |
| Ex13 | 77 | 110 | 90-120 |
| Ex9 | 787 | 65 | 35-100 |
| Ex14 | 158 | 120 | 95-130 |

(continued)

|  | Maximum probe tack [kPa] | $T_{max\ tack}$ [°C] | T-range [°C] |
|---|---|---|---|
| Ex15 | 146 | 110 | 85-120 |

Table 9: Maximum probe tack, $T_{max\ tack}$ and temperature range, in which tack occurs of the hot melt adhesive compositions Ex9, 16-18

|  | Maximum probe tack [kPa] | $T_{max\ tack}$ [°C] | T-range [°C] |
|---|---|---|---|
| Ex9 | 787 | 65 | 35-100 |
| Ex16 | 562 | 70 | 50-100 |
| Ex17 | 861 | 75 | 35-100 |
| Ex18 | 728 | 55 | 25-100 |

## 2.4 Measurement of Brookfield melt viscosity of the hot melt adhesive compositions Ex1-18

The Brookfield melt viscosities at 150 °C, 160 °C and 180 °C of the above listed hot melt adhesive compositions Ex1-6 and Ex7-11 is measured as described above under Measuring Methods and listed below in Tables 10 and 11.

Table 10: Brookfield melt viscosities of the hot melt adhesive compositions Ex1-6, measured in mPa.s

|  | Viscosity at 150°C | Viscosity at 160°C | Viscosity at 180°C |
|---|---|---|---|
| Ex1 | * | * | * |
| Ex2 | 18500 | 13200 | 7500 |
| Ex3 | 21800 | 15200 | 8600 |
| Ex4 | 18700 | 13000 | 7400 |
| Ex5 | 46800 | 32700 | 17600 |
| Ex6 | 25200 | 17600 | 9800 |
| * = Viscosity too high, cannot be measured | | | |

Table 11: Brookfield melt viscosities of the hot melt adhesive compositions Ex7-11, measured in mPa·s

|  | Viscosity at 150°C | Viscosity at 160°C | Viscosity at 180°C |
|---|---|---|---|
| Ex7 | 69000 | 49400 | 26900 |
| Ex8 | 73500 | 54000 | 31600 |
| Ex9 | 51900 | 37700 | 21000 |
| Ex10 | 51700 | 38000 | 22100 |
| Ex11 | 67500 | 49100 | 28400 |

Table 12: Brookfield melt viscosities of the hot melt adhesive compositions examples Ex8, 9 and 12-15, measured in mPa·s

|  | Viscosity at 150°C | Viscosity at 160°C | Viscosity at 180°C |
|---|---|---|---|
| Ex8 | 73500 | 54000 | 31600 |
| Ex12 | * | * | 47000 |

(continued)

|  | Viscosity at 150°C | Viscosity at 160°C | Viscosity at 180°C |
|---|---|---|---|
| Ex13 | Not measured | | |
| Ex9 | 51900 | 37700 | 21000 |
| Ex14 | * | * | 34600 |
| Ex15 | Not measured | | |
| * = Viscosity too high, cannot be measured | | | |

Table 13: Brookfield melt viscosities of the hot melt adhesive compositions examples Ex 9 and 16-18, measured in mPa.s

|  | Viscosity at 150°C | Viscosity at 160°C | Viscosity at 180°C |
|---|---|---|---|
| Ex9 | 51900 | 37700 | 21000 |
| Ex16 | 61300 | 44900 | 25600 |
| Ex17 | 49100 | 34800 | 20500 |
| Ex18 | 21000 | 15000 | 10000 |

**2.5 T-peel tests of the hot melt adhesive compositions Ex1-6 and 15-16**

The T-peel strength measurements of the above listed hot melt adhesive compositions Ex1-6 and 15-16 on polypropylene film substrates as described above under Measuring Methods are listed below in Tables 14 for untreated polypropylene film substrates and in Table 15 for APPJ surface treated polypropylene film substrates .

Table 14: T-peel strength measurements of the hot melt adhesive compositions Ex1-6, 15-16 on untreated polypropylene film substrates

|  | T-peel strength [N/m] | Locus of failure |
|---|---|---|
| Ex1 | 18 ± 2 | A |
| Ex2 | 16 ± 7 | A |
| Ex3 | 9 ± 1 | CA |
| Ex4 | 28 ± 4 | A |
| Ex5 | 24 ± 5 | CA |
| Ex6 | 25 ± 1 | A |
| Ex15 | 104 ± 11 | A |
| Ex16 | 42 ± 9 | A |
| A = Adhesive failure; CA = Cohesive failure of the adhesive | | |

Table 15: T-peel strength measurements of the hot melt adhesive compositions Ex2-4, 15-16 on APPJ surface treated polypropylene film substrates

|  | T-peel strength [N/m] | Locus of failure |
|---|---|---|
| Ex2 | 31 ± 8 | A |
| Ex3 | 60 ± 6 | CA |
| Ex4 | 55 ± 4 | A |
| Ex15 | 158 ± 14 | A |

(continued)

| | T-peel strength [N/m] | Locus of failure |
|---|---|---|
| Ex16 | 111 ± 16 | A |

**2.6 Shear strength measurements of the hot melt adhesive compositions Ex1-16**

The shear strength measurements of the above listed hot melt adhesive compositions Ex1-16 on steel substrates and of the above listed hot melt adhesive compositions Ex1-16 on polypropylene film substrates as described above under Measuring Methods are listed below in Tables 16 to 21.

Table 16: Shear strength measurements of the hot melt adhesive compositions Ex1-6 on steel substrates Adhesion failure was always obtained..

| | Shear strength [MPa] |
|---|---|
| Ex1 | 1.1 ± 0.3 |
| Ex2 | 2.0 ± 0.0 |
| Ex3 | 2.8 ± 0.2 |
| Ex4 | 1.8 ± 0.2 |
| Ex5 | 1.8 ± 0.3 |
| Ex6 | 2.6 ± 0.1 |

Table 17: Shear strength measurements of the hot melt adhesive compositions Ex1-6 on polypropylene film substrates. Adhesion failure was always obtained.

| | Shear strength [MPa] |
|---|---|
| Ex1 | 0.19 ± 0.02 |
| Ex2 | 0.22 ± 0.04 |
| Ex3 | 0.27 ± 0.02 |
| Ex4 | 0.21 ± 0.02 |
| Ex5 | 0.25 ± 0.02 |
| Ex6 | 0.24 ± 0.02 |

Table 18: Shear strength measurements of the hot melt adhesive compositions Ex7-11 on steel substrates. Adhesion failure was always obtained.

| | Shear strength [MPa] |
|---|---|
| Ex7 | 1.5 ± 0.3 |
| Ex8 | 1.8 ± 0.4 |
| Ex9 | 0.6 ± 0.1 |
| Ex10 | 2.1 ± 0.2 |
| Ex11 | 2.1 ± 0.3 |

Table 19: Shear strength measurements of the hot melt adhesive compositions Ex7-11 on polypropylene film substrates

|  | Shear strength [MPa] | Locus of failure |
|---|---|---|
| Ex7 | 0.27 ± 0.04 | A |
| Ex8 | 0.26 ± 0.07 | A |
| Ex9 | 0.33 ± 0.01 | CS |
| Ex10 | 0.30 ± 0.01 | CS |
| Ex11 | 0.27 ± 0.05 | CS |
| A = Adhesive failure; CS = Cohesive failure of the polypropylene film | | |

Table 20: Shear strength measurements of the hot melt adhesive compositions Ex8, 9, 12-16 on steel substrates. Adhesion failure was always obtained.

|  | Shear strength [MPa] |
|---|---|
| Ex8 | 1.8 ± 0.4 |
| Ex12 | 1.3 ± 0.2 |
| Ex13 | 0.9 ± 0.3 |
| Ex9 | 0.6 ± 0.1 |
| Ex14 | 1.8 ± 0.1 |
| Ex15 | 1.8 ± 0.0 |
| Ex16 | 1.5 ± 0.3 |

Table 21: Shear strength measurements of the hot melt adhesive compositions Ex8, 9, 12-16 on polypropylene film substrates

|  | Shear strength [MPa] | Locus of failure |
|---|---|---|
| Ex8 | 0.26 ± 0.07 | A |
| Ex12 | 0.10 ± 0.03 | A |
| Ex13 | 0.07 ± 0.01 | A |
| Ex9 | 0.33 ± 0.01 | CS |
| Ex14 | 0.11 ± 0.02 | A |
| Ex15 | 0.10 ± 0.01 | A |
| Ex16 | 0.28 ± 0.03 | 50% CS + 50% A |
| A = Adhesive failure; CS = Cohesive failure of the polypropylene film | | |

**2.7 Measurement of the softening point of the hot melt adhesive compositions Ex 2, 4, 9, 16-18**

The softening points of the above listed hot melt adhesive compositions Ex 2, 4, 9, 16-18 are measured as described above under Measuring Methods and listed below in Table 22.

Table 22: Softening point measurements of the hot melt adhesive compositions Ex2, 4, 9, 16-18

|  | Softening point [°C] |
|---|---|
| Ex2 | 144 |

(continued)

| | Softening point [°C] |
|---|---|
| Ex4 | 142 |
| Ex9 | 145 ±1 |
| Ex16 | 152 ± 1 |
| Ex17 | 145 ± 1 |
| Ex18 | 144 ± 1 |

**2.8 Measurement of the open time of the hot melt adhesive compositions Ex1-18**

The open time of the above listed hot melt adhesive compositions Ex1-18 are measured as described above under Measuring Methods and listed below in Tables 23-26.

Table 23: Open time measurements of the hot melt adhesive compositions Ex1-6 at time 0s and 5s. Numbers indicate the percentages of joints that do not open up

| | 0s [%] | 5s [%] |
|---|---|---|
| Ex1 | 80 | 100 |
| Ex2 | 100 | --- |
| Ex3 | 20 | 100 |
| Ex4 | 40 | 100 |
| Ex5 | 20 | 100 |
| Ex6 | 80 | 100 |

Table 24: Open time measurements of the hot melt adhesive compositions Ex7-11 at time 0s, 5s and 10s. Numbers indicate the percentages of joints that do not open up

| | 0s [%] | 5s [%] | 10s [%] |
|---|---|---|---|
| Ex7 | 80 | 100 | --- |
| Ex8 | 40 | 100 | --- |
| Ex9 | 60 | 80 | 100 |
| Ex10 | 40 | 80 | 100 |
| Ex11 | 40 | 100 | --- |

Table 25: Open time measurements of the hot melt adhesive compositions Ex8, 9, 12-15 at time 0s, 5s and 10s. Numbers indicate the percentages of joints that do not open up

| | 0s [%] | 5s [%] | 10s [%] |
|---|---|---|---|
| Ex8 | 40 | 100 | --- |
| Ex12 | 0 | 60 | 100 |
| Ex13 | 60 | 100 | --- |
| Ex9 | 60 | 80 | 100 |
| Ex14 | 60 | 100 | --- |
| Ex15 | 0 | 100 | --- |

Table 26: Open time measurements of the hot melt adhesive compositions Ex9, 16-18 at time 0s, 5s, 10s, 15s and 20s. Numbers indicate the percentages of joints that do not open up

|  | 0s [%] | 5s [%] | 10s [%] | 15s [%] | 20s [%] |
|---|---|---|---|---|---|
| Ex9 | 60 | 80 | 100 | --- | --- |
| Ex16 | 0 | 80 | 100 | --- | --- |
| Ex17 | 0 | 20 | 80 | 100 | --- |
| Ex18 | 0 | 20 | 40 | 80 | 100 |

**2.9 Comparison of the hot melt adhesives compositions of the present invention with commercially available or referential hot melt adhesive compositions**

The inventive hot melt adhesive compositions of Ex 4, 9 and 16 are compared in the following with commercially available or referential hot melt adhesive compositions.

The following commercially available or referential hot melt adhesive compositions are examined:

CE1: Technomelt Supra 350HT is a hot melt adhesive composition based on polyethylene, commercially available from Henkel, Düsseldorf, Germany

CE2: 39.8 wt% ethylene-vinyl acetate (EVA) copolymer with a VA content of 27 wt% and a $MFR_2$ of 150 g/10 min (2,16 kg, 190 °C), commercially available from Repsol, Madrid, Spain, was mixed with 39.8 wt% pentaester of stabilized gum rosin tackifier Resoester N35, commercially available from Luresa, Segovia, Spain with a softening point of 94-100 °C, 19.9 wt% Inter 3078 microcrystalline wax, commercially available from Iberceras, Madrid, Spain and 0.5 wt% Irganox 1010.

CE3: 39.8 wt% ethylene-butyl acrylate (EBA) copolymer with a BA content of 27 wt% and a $MFR_2$ of 150 g/10 min (2,16 kg, 190 °C), commercially available from Repsol, Madrid, Spain, was mixed with 39.8 wt% pentaester of stabilized gum rosin tackifier Resoester N35, commercially available from Luresa, Segovia, Spain with a softening point of 94-100 °C, 19.9 wt% Inter 3078 microcrystalline wax, commercially available from Iberceras, Madrid, Spain and 0.5 wt% Irganox 1010.

CE4 49.5 wt% styrene-butadiene-styrene (SBS) block copolymer Calprene 700 with 30 wt% styrene and a $MFR_5$ of 5 g/10 min (5 kg, 190 °C), commercially available from Dynasol, Santander, Spain, was mixed with 39.6 wt% P1095-N, 9.9 wt% naphthenic oil Nyflex 223, having a kinematic viscosity at 40 °C of 78 $mm^2$/s, commercially available from Nynas, Madrid, Spain and 1 wt% Irganox 1010.

In the following Tables 27-33 the tack, Brookfield viscosities, T peel strength on untreated polypropylene film substrates, shear strength on steel substrates and polypropylene film substrates, softening points and open time are compared.

Table 27: Maximum probe tack, $T_{max\ tack}$ and temperature range, in which tack occurs of the hot melt adhesive compositions Ex 4, 9, 16 and CE1-4

|  | Maximum probe tack [kPa] | $T_{max\ tack}$ [°C] | T-range [°C] |
|---|---|---|---|
| Ex4 | 929 | 80 | 50-100 |
| Ex9 | 787 | 65 | 35-100 |
| Ex16 | 562 | 70 | 50-100 |
| CE1 | 321 | 90 | 60-130 |
| CE2 | 384 | 90 | 25-100 |
| CE3 | 507 | 70 | 30-100 |
| CE4 | 578 | 70 | 30-100 |

Table 28: Brookfield melt viscosities of the hot melt adhesive compositions Ex 4, 9 and 16 and CE1-4 measured in mPa.s

|  | Viscosity at 150°C | Viscosity at 160°C | Viscosity at 180°C |
|---|---|---|---|
| Ex4 | 18700 | 13000 | 7400 |
| Ex9 | 51900 | 37700 | 21000 |
| Ex16 | 61300 | 44900 | 25600 |
| CE1 | 2500 | 1800 | 1200 |
| CE2 | 4250 | 3200 | 1900 |
| CE3 | 4350 | 3200 | 1900 |
| CE4 | * | * | * |
| * = Viscosity too high, cannot be measured | | | |

Table 29: T-peel strength measurements of the hot melt adhesive compositions Ex 4 and 16 and CE1-4 on untreated polypropylene film substrates

|  | T-peel strength [N/m] | Locus of failure |
|---|---|---|
| Ex4 | 28 ± 4 | A |
| Ex16 | 42 ± 9 | A |
| CE1 | 145 ± 25 | A |
| CE2 | 168 ± 61 | 20% CA, 80% A |
| CE3 | 51 ± 11 | A |
| CE4 | 354 ± 15 | CA |
| A = Adhesive failure; CS = Cohesive failure of the polypropylene film | | |

Table 30: Shear strength measurements of the hot melt adhesive compositions Ex 4, 9 and 16 and CE1-4 on steel substrates

|  | Shear strength [MPa] |
|---|---|
| Ex4 | 1.8 ± 0.2 |
| Ex9 | 0.6 ± 0.1 |
| Ex16 | 1.5 ± 0.3 |
| CE1 | 1.6 ± 0.1 |
| CE2 | 1.1 ± 0.1 |
| CE3 | 1.1 ± 0.1 |
| CE4 | 0.4 ± 0.1 |

Table 31: Shear strength measurements of the hot melt adhesive compositions Ex 4, 9 and 16 and CE1-4 on polypropylene film substrates

|  | Shear strength [MPa] | Locus of failure |
|---|---|---|
| Ex4 | 0.21 ± 0.02 | A |
| Ex9 | 0.33 ± 0.01 | CS |

(continued)

| | Shear strength [MPa] | Locus of failure |
|---|---|---|
| Ex16 | 0.28 $\pm$ 0.03 | 50% CS + 50% A |
| CE1 | 0.32 $\pm$ 0.01 | CS |
| CE2 | 0.33 $\pm$ 0.01 | CS |
| CE3 | 0.33 $\pm$ 0.01 | CS |
| CE4 | 0.33 $\pm$ 0.01 | CS |
| A = Adhesive failure; CS = Cohesive failure of the polypropylene film | | |

Table 32: Softening point measurements of the hot melt adhesive compositions Ex 4, 9 and 16 and CE1-4

| | Softening point [°C] |
|---|---|
| Ex4 | 142 $\pm$ 1 |
| Ex9 | 145 $\pm$ 1 |
| Ex16 | 152 $\pm$ 1 |
| CE1 | 105 $\pm$ 1 |
| CE2 | 80 $\pm$ 1 |
| CE3 | 82 $\pm$ 1 |
| CE4 | 198 $\pm$ 1 |

Table 33: Open time measurements of the hot melt adhesive compositions Ex 4, 9 and 16 and CE1-4 at time 0s, 5s, 10s, 15s and 20s

| | 0s [%] | 5s [%] | 10s [%] |
|---|---|---|---|
| Ex4 | 40 | 100 | --- |
| Ex9 | 60 | 80 | 100 |
| Ex16 | 0 | 80 | 100 |
| CE1 | 20 | 80 | 100 |
| CE2 | 20 | 60 | 100 |
| CE3 | 40 | 100 | --- |
| CE4 | 60 | 100 | --- |

**Claims**

1.  A composition comprising

    (A) a polypropylene resin comprising

    (A-1) a multimodal propylene random copolymer (R-PP), being a multimodal random copolymer of propylene and one or more comonomer(s) selected from ethylene and $C_4$-$C_{10}$ alpha-olefins, with a melt flow rate $MFR_2$ of at least 50 g/10 min, determined according to ISO 1133 at a temperature of 230°C and a load of 2.16 kg and
    (A-2) a propylene copolymer (PC), which is different from the multimodal propylene random copolymer (R-PP) and has

a) at least one comonomer selected from ethylene and $C_4$-$C_{12}$ alpha-olefins,
b) a total comonomer content in the range of 4.5 to 20.0 % by weight, based on the total weight amount of monomer units in the propylene copolymer (PC),
c) a Vicat-A temperature > 80 °C, as measured according to ISO 306,
d) a storage modulus (G'23) in the range of from 100 to 1000 MPa, as measured at 23 °C according to ISO 6721-02 and ISO 6721-07, and
e) a melting temperature in the range of from 120 °C to 160 °C, as measured according to ISO 11357-3.

(B) a tackifying resin being selected from aliphatic, aromatic, aliphatic/aromatic copolymer hydrocarbon or heterohydrocarbon resins or mixtures thereof.

2. The composition according to claim 1, wherein the weight ratio of the multimodal propylene random copolymer (R-PP) and the propylene copolymer (PC) in the polypropylene resin is from 1 : 2 to 5 : 1, preferably 1 : 1 to 4 : 1, most preferably 1.5 : 1 to 3 : 1.

3. The composition according to any of the preceding claims, wherein the propylene copolymer (PC) is selected from a propylene copolymer-1 (PC-1) having at least one comonomer selected from ethylene and/or a $C_4$-$C_{12}$ alpha-olefin and wherein such propylene copolymer-1 (PC-1) has a Flexibility >0.8 which is calculated according to the equation:

$$Flexibility = EAY * 100000/(TSY * E)$$

wherein:

EAY is the elongation at yield value,
TSY is the tensile strength at yield value, in MPa and
E is the tensile modulus value, in MPa.

and
a propylene copolymer-2 (PC-2) comprising units derived from propylene, ethylene and at least one comonomer selected from linear or branched $C_4$-$C_{12}$ alpha-olefin and wherein such propylene copolymer-2 (PC-2) has:

a) a glass transition temperature $T_g$ in the range of -12 to 0 °C and
b) a total comonomer content in the range of 6.0 to 15.0 by weight, based on the total weight amount of monomer units in the propylene copolymer-2 (PC-2).

4. The composition according to any of the preceding claims, wherein the tackifying resin (B) is selected from a list consisting of polyterpene resins, rosin resins, rosin ester resins, $C_5$-$C_{10}$ aliphatic hydrocarbon resins, aromatic modified aliphatic resins or mixtures thereof, preferably from a list consisting of polyterpene resins, $C_5$ aliphatic hydrocarbon resins, aromatic modified aliphatic resins or mixtures thereof, still more preferably from a list consisting of polyterpene resins, $C_5$ aliphatic hydrocarbon resins or mixtures thereof, and most preferably polyterpene resins.

5. The composition according to any one of the preceding claims, wherein the composition consists of

(A) from 10 to 60 % by weight, preferably 20 to 55 % by weight, most preferably 25 to 50 % by weight of the polypropylene resin,
(B) from 20 to 90 % by weight, preferably 25 to 60 % by weight, most preferably 30 to 50 % by weight of the tackifying resin,
(C) from 0 to 60 % by weight, preferably 1.0 to 60 % by weight, more preferably 5.0 to 45 % by weight, most preferably 10 to 30 % by weight of the plasticizer resin,
(D) from 0 to 50 % by weight, preferably 0.5 to 40 % by weight, most preferably 1.0 to 30 % by weight of the filler, and
(E) from 0 to 5.0 % by weight, preferably 0.1 to 4.0 % by weight, more preferably 0.15 to 3.0 % by weight, most preferably 0.2 to 2.0 % of the additives.

6. The composition according to any of the preceding claims having a Brookfield viscosity at 160 °C of less than 60,000 mPa·s, preferably less than 40,000 mPa·s, more preferably less than 30,000 mPa·s, most preferably less than 20,000 mPa·s, preferably with a lower limit of at least 4,000 mPa·s, as measured according to ASTM D-3236.

7. The composition according to any of the preceding claims having a maximum probe tack of at least 150 kPa, preferably of at least 500 kPa, most preferably of at least 600 kPa, preferably to an upper limit of not more than 1,500 kPa, more preferably not more than 1,100 kPa, wherein the maximum tack is preferably measured at a temperature of from 50 °C to 100 °C, more preferably at a temperature of from 65 °C to 85 °C.

8. The composition according to any of the preceding claims having a softening point of not more than 160°C, more preferably not more than 155°C and most preferably of not more than 150°C.

9. The composition according to any of the preceding claims having an open time of at least 2 s, more preferably of at least 5 s and most preferably of at least 10 s.

10. An article comprising the composition according to any of the preceding claims and at least one substrate, wherein the composition is in direct contact with at least one surface of said substrate.

11. The article according to claim 10, wherein the substrate is an untreated polypropylene film, the composition has a T-peel strength of at least 5 N/m, more preferably of at least 15 N/m and most preferably of at least 24 N/m.

12. The article according to claim 10 or 11, wherein the substrate is an APPJ surface treated polypropylene film, the composition has a T-peel strength of at least 20 N/m, more preferably of at least 30 N/m and most preferably of at least 50 N/m.

13. The article according to any one of claims 10 to 12, wherein the substrate is a polypropylene film with a thickness of 300 μm and the composition has a single-lap shear strength of from 0.05 to 0.4 MPa.

14. The article according to any one of claims 10 to 12, wherein the substrate is a steel substrate and the composition has a single-lap shear strength of from 0.5 to 4.0 MPa.

15. Use of the composition according to any one of claims 1 to 9 for the preparation of an article.

Europäisches
Patentamt

European
Patent Office

Office européen
des brevets

# EUROPEAN SEARCH REPORT

Application Number

EP 18 18 7512

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2017/016711 A1 (BOREALIS AG [AT]) 2 February 2017 (2017-02-02) * page 26 - page 28; claim 1 * ----- | 1-15 | INV. C08L23/14 |

TECHNICAL FIELDS
SEARCHED (IPC)

C08L

The present search report has been drawn up for all claims

| Place of search | Date of completion of the search | Examiner |
|---|---|---|
| Munich | 5 February 2019 | Rouault, Yannick |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 18 7512

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2019

| Patent document cited in search report | Publication date | Patent family member(s) | Publication date |
|---|---|---|---|
| WO 2017016711 A1 | 02-02-2017 | AU 2016299098 A1 | 25-01-2018 |
| | | BR 112018001471 A2 | 11-09-2018 |
| | | CA 2993466 A1 | 02-02-2017 |
| | | CN 107849413 A | 27-03-2018 |
| | | EP 3328955 A1 | 06-06-2018 |
| | | JP 2018529795 A | 11-10-2018 |
| | | US 2018244905 A1 | 30-08-2018 |
| | | WO 2017016711 A1 | 02-02-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2014014491 A
- EP 0887379 A
- WO 9212182 A
- WO 2004000899 A
- WO 2004111095 A
- WO 9924478 A
- WO 9924479 A
- WO 0068315 A
- WO 2012007430 A
- WO 2014187687 A
- WO 8707620 A
- WO 9221705 A
- WO 9311165 A
- WO 9311166 A
- WO 9319100 A
- WO 9736939 A
- WO 9812234 A
- WO 9933842 A
- WO 03000756 A
- WO 03000757 A
- WO 03000754 A
- WO 03000755 A
- WO 2004029112 A
- EP 2610271 A
- WO 9219659 A
- WO 9219653 A
- WO 9219658 A
- US 4382019 A
- US 4435550 A
- US 4465782 A
- US 4473660 A
- US 4560671 A
- US 5539067 A
- US 5618771 A
- EP 45975 A
- EP 45976 A
- EP 45977 A
- WO 9532994 A
- US 4107414 A
- US 4186107 A
- US 4226963 A
- US 4347160 A
- US 4472524 A
- US 4522930 A
- US 4530912 A
- US 4532313 A
- US 4657882 A
- US 4581342 A
- EP 629631 A
- EP 629632 A
- WO 0026266 A
- WO 02002576 A
- WO 02002575 A
- WO 9912943 A
- WO 9840331 A
- EP 776913 A
- EP 1074557 A
- WO 9942497 A
- EP 2999721 A
- WO 2017017136 A

### Non-patent literature cited in the description

- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromoleucles,* 1997, vol. 30, 6251
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **RESCONI, L. ; CAVALLO, L. ; FAIT, A. ; PIEMON-TESI, F.** *Chem. Rev.,* 2000, vol. 100, 1253
- **WANG, W-J. ; ZHU, S.** *Macromolecules,* 2000, vol. 33, 1157
- **CHENG, H. N.** *Macromolecules,* 1984, vol. 17, 1950
- **SINGH, G. ; KOTHARI, A. ; GUPTA, V.** *Polymer Testing,* 2009, vol. 28 (5), 475
- **KAKUGO, M. ; NAITO, Y. ; MIZUNUMA, K. ; MIYATAKE, T.** *Macromolecules,* 1982, vol. 15, 1150
- **RANDALL, J.** *Macromol. Sci., Rev. Macromol. Chem. Phys.,* 1989, vol. C29, 201

- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45, S1, , S198
- **CASTIGNOLLES, P. ; GRAF, R. ; PARKINSON, M. ; WILHELM, M. ; GABORIEAU, M.** *Polymer,* 2009, vol. 50, 2373